# EUROPEAN PATENT APPLICATION

(11) **EP 4 322 467 A1**
(43) Date of publication of application: **14.02.2024**
(21) Application number: 21938305.6
(22) Date of filing: 28.04.2021
(51) Int. Cl.: H04L 9/32

(54) **KEY PROCESSING METHOD AND APPARATUS**

(71) Applicant: Huawei Technologies Co., Ltd., Shenzhen, Guangdong 518129 (CN)
(72) Inventor: SHENG, De, Shenzhen, Guangdong 518129 (CN); GENG, Feng, Shenzhen, Guangdong 518129 (CN); YIN, Xinxing, Shenzhen, Guangdong 518129 (CN)
(74) Representative: Gill Jennings & Every LLP
(86) International application number: PCT/CN2021/090439
(87) International publication number: WO 2022/226819

(57) **Abstract**

Embodiments of this application provide a key processing method and apparatus, and relate to the field of communication technologies. The key processing method includes: a first device determines a first memory slot, where the first memory slot is used to store a first key; and the first device determines a second memory slot associated with the first memory slot, where the second memory slot is used to store a second key, and the second key is an update key of the first key. In this way, a complex key update process in the conventional technology can be avoided, and the first key is updated by using the first memory slot and the second memory slot, thereby simplifying key update operations and improving efficiency of key update.

## Description

### TECHNICAL FIELD

This application relates to the field of communication technologies, and in particular, to a key processing method and apparatus.

### BACKGROUND

With the development of society, intelligent vehicles are gradually entering people's daily life. An intelligent vehicle includes a plurality of devices, and normal communication between the plurality of devices is a necessary condition for ensuring normal driving of the vehicle. A key is a basis for communication between in-vehicle devices. Currently, in-vehicle key management may depend on a cloud key manager system (key manager system, KMS), and keys of each device may be managed on a cloud KMS of a vehicle manufacturer.

With the evolution of the Internet of Vehicles (IoV), information security inside and outside a vehicle may be threatened. If a same key is used for a long time, security risks may be caused. Therefore, the key needs to be changed irregularly to ensure security of the key. Generally, when the key of a vehicle needs to be updated, a tool at a professional vehicle maintenance center may be used to connect to the cloud key management center of the vehicle to obtain key information, and then connect to in-vehicle devices one by one to load the new key.

However, the foregoing method for updating the key has a low degree of automation, and the key update process is complex, which results in low efficiency in updating the key.

### SUMMARY

Embodiments of this application provide a key processing method and apparatus, to provide at least two memory slots to support key update, so that key update can be implemented based on the two memory slots, thereby simplifying key update operations.

According to a first aspect, an embodiment of this application provides a key processing method, including: a first device determines a first memory slot, where the first memory slot is used to store a first key; and the first device determines a second memory slot associated with the first memory slot, where the second memory slot is used to store a second key, and the second key is an update key of the first key.

In this way, steps of key update can be effectively reduced, and the first key is updated by using the first memory slot and the second memory slot, thereby simplifying key update operations and improving efficiency of key update.

With reference to the first aspect, in a possible implementation, that the first device determines a second memory slot associated with the first memory slot includes: the first device determines, based on a hardware security mechanism, the second memory slot associated with the first memory slot, where the hardware security mechanism is used to update the first key.

In this way, the hardware security mechanism is extended, so that the hardware security mechanism can provide at least two memory slots to support key update, thereby implementing key update based on the two memory slots and simplifying key update operations.

With reference to the first aspect, in a possible implementation, the second memory slot is predefined by the hardware security mechanism, or the second memory slot is determined based on a first command received by an interface in the hardware security mechanism.

In this way, the second memory slot and the first memory slot may be paired based on the hardware security mechanism, so that key update may be implemented based on the foregoing two memory slots, thereby simplifying key update operations.

With reference to the first aspect, in a possible implementation, when the first key is updated: the first memory slot and the second memory slot are alternately used; or the first memory slot is always used to store an updated key.

In this way, in the key update process, two memory slots that are used alternately can improve reliability of key update, and one memory slot is always used, to reduce occupancy of the memory slot during key update.

With reference to the first aspect, in a possible implementation, storage information of the key includes at least one of the following: information used to indicate a key build status, information used to indicate whether a key is being used, or information used to indicate whether a key is an un-updated key or an updated key.

In this way, in the key update process, storage information of a plurality of types of keys may further ensure security of key update.

With reference to the first aspect, in a possible implementation, the storage information of the first key further includes: information used to indicate that a memory slot of the first key is the first memory slot or the second memory slot, or information used to indicate a memory slot paired with a memory slot of the first key.

In this way, in the key update process, storage information of a plurality of types of keys may further ensure security of key update.

With reference to the first aspect, in a possible implementation, the first command includes at least one of the following: a command used to instruct to pair the first memory slot and the second memory slot, a command used to instruct to unpair the first memory slot and the second memory slot, a command used to instruct to update a key, a command used to instruct to clear an un-updated key, a command used to instruct to query key information in the first memory slot and/or the second memory slot, or a command used to instruct to transfer a key from one memory slot to another memory slot.

In this way, in the key update process, a plurality of first commands may further implement key update, thereby simplifying key update operations.

With reference to the first aspect, in a possible implementation, that the first device determines, based on a hardware security mechanism, the second memory slot associated with the first memory slot includes: the first device receives a first message from the second device, where the first message includes first encryption information used to indicate the first memory slot and the second memory slot; the first device verifies the first encryption information; and the first device determines the second memory slot associated with the first memory slot when the first encryption information is successfully verified.

In this way, the first device can determine, according to the first message from the second device, the second memory slot associated with the first memory slot, so that key update can be implemented based on the two memory slots, thereby simplifying key update operations.

With reference to the first aspect, in a possible implementation, that the first device determines the second memory slot associated with the first memory slot when the first encryption information is successfully verified includes: when the first encryption information is successfully verified, the first device verifies whether the second memory slot is occupied; and when the second memory slot is not occupied, the first device determines the second memory slot associated with the first memory slot.

In this way, the first device can obtain, according to a verification process, the second memory slot that can be used, to prevent a key update error caused by occupancy of the second memory slot, and further implement key update.

With reference to the first aspect, in a possible implementation, the first encryption information includes a first parameter M1 and a second parameter M2, where M1 is related to information in the first memory slot and information in the second memory slot, and M2 is related to M1 and the first key.

In this way, reliability of key update can be ensured by using the first encryption information and a plurality of parameters may be used.

With reference to the first aspect, in a possible implementation, the method further includes: the first device unbinds the second memory slot based on the hardware security mechanism.

In this way, unbinding the second memory slot can release space of the memory slot in a timely manner, improve utilization of the memory slot, and simplify key update operations.

With reference to the first aspect, in a possible implementation, the method further includes: the first device updates the first key based on the hardware security mechanism.

In this way, the hardware security mechanism can be extended, so that the hardware security mechanism can provide at least two memory slots to support update of the first key. In this way, key update can be implemented based on the two memory slots, thereby simplifying key update operations and improving efficiency of key update.

With reference to the first aspect, in a possible implementation, that the first device updates the first key based on the hardware security mechanism includes: the first device receives a second message from the second device, where the second message includes second encryption information used to indicate the first memory slot, the second memory slot, and the second key; the first device obtains the second key according to the second encryption information; the first device stores the second key in the second memory slot; the first device builds third encryption information according to the second key and the second memory slot, where the third encryption information indicates the first device to complete storage of the second key; and the first device sends the third encryption information to the second device.

In this way, the first device can determine the second key based on the second message from the second device, and further update the key based on the second key, thereby simplifying key update operations.

With reference to the first aspect, in a possible implementation, the second encryption information includes a third parameter M3, a fourth parameter M4, and a fifth parameter M5, where M3 is related to information in the first memory slot and information in the second memory slot, M4 is related to the second key, and M5 is related to M3, M4, and the first key.

In this way, reliability of key update can be ensured by using the second encryption information and a plurality of parameters.

With reference to the first aspect, in a possible implementation, the third encryption information includes a sixth parameter M6 and a seventh parameter M7, where M6 is related to information in the second memory slot, and M7 is related to the second key.

In this way, reliability of key update can be ensured by using the third encryption information and a plurality of parameters.

With reference to the first aspect, in a possible implementation, after the first device sends the third encryption information to the second device, the method further includes: the first device receives fourth encryption information from the second device, where the fourth encryption information indicates the first device to delete the first key; the first device verifies the fourth encryption information; and when the fourth encryption information is successfully verified, the first device deletes the first key; or when the fourth encryption information is successfully verified, the first device deletes the first key, transfers the second key from the second memory slot to the first memory slot, and cancels the association relationship between the second memory slot and the first memory slot.

In this way, the first key is deleted, and the second key is enabled, thereby avoiding interference of the first key to a service and simplifying key update operations.

With reference to the first aspect, in a possible implementation, the fourth encryption information includes an eighth parameter M8 and a ninth parameter M9, where M8 is related to information in the second memory slot, and M9 is related to M8 and the second key.

In this way, reliability of key update can be ensured by using the fourth encryption information and a plurality of parameters.

With reference to the first aspect, in a possible implementation, the method further includes: the first device receives the command used to instruct to pair the first memory slot and the second memory slot; the first device generates first encryption information based on the hardware security mechanism according to the command used to instruct to pair the first memory slot and the second memory slot, where the first encryption information indicates the first memory slot and the second memory slot; and the first device sends a first message to the second device, where the first message includes the first encryption information.

In this way, the first device can determine, according to the command, the second memory slot associated with the first memory slot, to implement key update based on the two memory slots, thereby simplifying key update operations.

With reference to the first aspect, in a possible implementation, the method further includes: the first device receives the command used to instruct to update a key; the first device generates second encryption information based on the hardware security mechanism according to the command used to instruct to update a key, where the second encryption information indicates the first memory slot, the second memory slot, and the second key; the first device sends a second message to the second device, where the second message includes the second encryption information; the first device receives third encryption information from the second device, where the third encryption information is used to indicate the second device to complete storage of the second key; the first device verifies the third encryption information; and when the third encryption information is successfully verified, the first device determines that the second key is successfully updated.

In this way, the hardware security mechanism can be extended, so that the hardware security mechanism can provide at least two memory slots to support update of the first key. In this way, key update can be implemented based on the two memory slots, thereby simplifying key update operations and improving efficiency of key update.

With reference to the first aspect, in a possible implementation, the method further includes: the first device sends fourth encryption information to the second device, where the fourth encryption information indicates the first device to delete the first key.

In this way, the first key is deleted, and the second key is enabled, thereby avoiding interference of the first key to a service and simplifying key update operations.

According to a second aspect, an embodiment of this application provides a key processing apparatus, including: a processing unit, configured to determine a first memory slot, where the first memory slot is used to store a first key; and the processing unit is further configured to determine a second memory slot associated with the first memory slot, where the second memory slot is used to store a second key, and the second key is an update key of the first key.

With reference to the second aspect, in a possible implementation, the processing unit is further configured to determine, based on a hardware security mechanism, the second memory slot associated with the first memory slot, where the hardware security mechanism is used to update the first key.

With reference to the second aspect, in a possible implementation, the second memory slot is predefined by the hardware security mechanism, or the second memory slot is determined according to a first command received by an interface in the hardware security mechanism.

With reference to the second aspect, in a possible implementation, when the first key is updated: the first memory slot and the second memory slot are alternately used; or the first memory slot is always used to store an updated key.

With reference to the second aspect, in a possible implementation, storage information of the key includes at least one of the following: information used to indicate a key build status, information used to indicate whether a key is being used, or information used to indicate whether a key is an un-updated key or an updated key.

With reference to the second aspect, in a possible implementation, the storage information of the first key further includes: information used to indicate that a memory slot of the first key is the first memory slot or the second memory slot, or information used to indicate a memory slot paired with a memory slot of the first key.

With reference to the second aspect, in a possible implementation, the first command includes at least one of the following: a command used to instruct to pair the first memory slot and the second memory slot, a command used to instruct to unpair the first memory slot and the second memory slot, a command used to instruct to update a key, a command used to instruct to clear an un-updated key, a command used to instruct to query key information in the first memory slot and/or the second memory slot, or a command used to instruct to transfer a key from one memory slot to another memory slot.

With reference to the second aspect, in a possible implementation, the key processing apparatus further includes a communication unit, configured to receive a first message from a second device, where the first message includes first encryption information used to indicate the first memory slot and the second memory slot; the processing unit is specifically configured to verify the first encryption information; and when the first encryption information is successfully verified, the processing unit is further specifically configured to determine the second memory slot associated with the first memory slot.

With reference to the second aspect, in a possible implementation, when the first encryption information is successfully verified, the processing unit is specifically configured to verify whether the second memory slot is occupied; and when the second memory slot is not occupied, the processing unit is further specifically configured to determine the second memory slot associated with the first memory slot.

With reference to the second aspect, in a possible implementation, the first encryption information includes a first parameter M1 and a second parameter M2, where M1 is related to information in the first memory slot and information in the second memory slot, and M2 is related to M1 and the first key.

With reference to the second aspect, in a possible implementation, the processing unit is further configured to unbind the second memory slot based on a hardware security mechanism.

With reference to the second aspect, in a possible implementation, the processing unit is further configured to update the first key based on the hardware security mechanism.

With reference to the second aspect, in a possible implementation, the communication unit is specifically configured to receive a second message from the second device, where the second message includes second encryption information used to indicate the first memory slot, the second memory slot, and the second key; the processing unit is specifically configured to obtain the second key according to the second encryption information; and the processing unit is further specifically configured to store the second key in the second memory slot; the processing unit is further specifically configured to build third encryption information according to the second key and the second memory slot, where the third encryption information indicates the first device to complete storage of the second key; and the communication unit is further specifically configured to send the third encryption information to the second device.

With reference to the second aspect, in a possible implementation, the second encryption information includes a third parameter M3, a fourth parameter M4, and a fifth parameter M5, where M3 is related to information in the first memory slot and information in the second memory slot, M4 is related to the second key, and M5 is related to M3, M4, and the first key.

With reference to the second aspect, in a possible implementation, the third encryption information includes a sixth parameter M6 and a seventh parameter M7, where M6 is related to information in the second memory slot, and M7 is related to the second key.

With reference to the second aspect, in a possible implementation, the communication unit is further configured to receive fourth encryption information from the second device, where the fourth encryption information indicates the first device to delete the first key; the processing unit is further configured to verify the fourth encryption information; and when the verification on the fourth encryption information succeeds, the processing unit is further configured to delete the first key; or if the verification of the fourth encryption information succeeds, the processing unit is further configured to: delete the first key, transfer the second key from the second memory slot to the first memory slot, and cancel the association relationship between the second memory slot and the first memory slot.

With reference to the second aspect, in a possible implementation, the fourth encryption information includes an eighth parameter M8 and a ninth parameter M9, where M8 is related to information in the second memory slot, and M9 is related to M8 and the second key.

With reference to the second aspect, in a possible implementation, the communication unit is further configured to receive a command used to instruct to pair the first memory slot and the second memory slot; the processing unit is further configured to generate, by the first device, first encryption information based on a hardware security mechanism according to the command used to instruct to pair the first memory slot and the second memory slot; the first encryption information indicates the first memory slot and the second memory slot; and the communication unit is further configured to send a first message to the second device, where the first message includes the first encryption information.

With reference to the second aspect, in a possible implementation, the communication unit is further configured to receive a command used to instruct to update a key; the processing unit is further configured to generate second encryption information based on the hardware security mechanism according to the command used to instruct to update a key, where the second encryption information indicates the first memory slot, the second memory slot, and the second key; the communication unit is further configured to send a second message to the second device, where the second message includes the second encryption information; the communication unit is further configured to receive third encryption information from the second device, where the third encryption information indicates the second device to complete storage of the second key; the processing unit is further configured to verify the third encryption information; and when the third encryption information is successfully verified, the processing unit is further configured to determine that the second key is successfully updated.

With reference to the second aspect, in a possible implementation, the communication unit is further configured to send fourth encryption information to the second device, where the fourth encryption information indicates the first device to delete the first key.

According to a third aspect, an embodiment of this application provides a computer-readable storage medium. The computer-readable storage medium stores a computer program or instructions. When the computer program or the instructions are run on a computer, the computer is enabled to perform the key processing method according to any one of the first aspect or the possible implementations of the first aspect.

According to a fourth aspect, an embodiment of this application provides a key processing apparatus. The apparatus includes a processor and a memory, the memory stores instructions, and when the instructions are run by the processor, the key processing method according to any one of the first aspect or the possible implementations of the first aspect is implemented.

In a possible implementation, an embodiment of this application provides a key processing apparatus. When the first device is an in-vehicle device, the apparatus includes a processor and a memory. The memory stores instructions. When the instructions are run by the processor, the key processing method based on the in-vehicle device according to any one of the first aspect or the possible implementations of the first aspect is implemented.

In a possible implementation, an embodiment of this application provides a key processing apparatus. When a first device is a cloud device, the apparatus includes a processor and a memory. The memory stores instructions. When the instructions are run by the processor, the cloud device-based key processing method according to any one of the first aspect or the possible implementations of the first aspect is implemented.

According to a fifth aspect, an embodiment of this application provides a key processing system. The system includes a cloud device-based system and/or an in-vehicle device-based system. The system may perform the key processing method according to any one of the first aspect or the possible implementations of the first aspect.

According to a sixth aspect, this application provides a chip or a chip system. The chip or the chip system includes at least one processor and a communication interface. The communication interface and the at least one processor are interconnected by using a line. The at least one processor is configured to run a computer program or instructions, to implement the key processing method according to any one of the first aspect or the possible implementations of the first aspect. The communication interface in the chip may be an input/output interface, a pin, a circuit, or the like.

In a possible implementation, the chip or the chip system described in this application further includes at least one memory, and the at least one memory stores instructions. The memory may be a storage unit inside the chip, for example, a register or a cache, or may be a storage unit (for example, a read-only memory or a random access memory) of the chip.

According to a seventh aspect, an embodiment of this application provides a computer program product. When the computer program product runs on one or more processors, the method according to any one of the first aspect or the possible implementations of the first aspect is implemented.

According to an eighth aspect, an embodiment of this application provides an electronic device, including at least one processor, where the at least one processor is configured to perform the method according to any one of the first aspect or the possible implementations of the first aspect.

In a possible implementation, the electronic device described in this application may further include an interface circuit. The interface circuit is configured to provide an information input and/or an information output for the at least one processor. The at least one processor is configured to perform the method according to any one of the first aspect or the possible implementations of the first aspect.

It should be understood that the second aspect to the eighth aspect of this application correspond to the technical solutions of the first aspect of this application, and beneficial effects achieved by the aspects and the corresponding feasible implementations are similar. Details are not described again.

### BRIEF DESCRIPTION OF DRAWINGS

FIG. 1 is a schematic diagram of a key processing scenario according to an embodiment of this application;
FIG. 2 is a schematic flowchart of a key processing method according to an embodiment of this application;
FIG. 3A and FIG. 3B are a schematic flowchart of setting a second memory slot according to an embodiment of this application;
FIG. 4A and FIG. 4B are another schematic flowchart of setting a second memory slot according to an embodiment of this application;
FIG. 5A to FIG. 5D are a schematic flowchart of updating a key according to an embodiment of this application;
FIG. 6A and FIG. 6B are another schematic flowchart of setting a second memory slot according to an embodiment of this application;
FIG. 7A to FIG. 7D are another schematic flowchart of updating a key according to an embodiment of this application;
FIG. 8 is a schematic diagram of a structure of a key processing apparatus according to an embodiment of this application;
FIG. 9 is a schematic diagram of a hardware structure of a control device according to an embodiment of this application; and
FIG. 10 is a schematic diagram of a structure of a chip according to an embodiment of this application.

### DESCRIPTION OF EMBODIMENTS

To clearly describe the technical solutions in embodiments of this application, terms such as "first" and "second" are used in embodiments of this application to distinguish between same items or similar items that provide basically same functions or purposes. For example, a first memory slot and a second memory slot are merely used to distinguish between different memory slots, but not to limit a sequence thereof. A person skilled in the art may understand that the words such as "first" and "second" do not limit a quantity or an execution sequence, and the words such as "first" and "second" do not indicate a definite difference.

It should be noted that, in this application, the terms "example" or "for example" is used to represent giving an example, an illustration, or a description. Any embodiment or design solution described as an "example" or "for example" in this application should not be explained as being preferred or advantageous over other embodiments or design solutions. To be precise, the word such as "example" or "for example" is intended to present a related concept in a specific manner.

In this application, at least one means one or more, and a plurality of means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, "at least one of a, b, or c" may represent "a, b, c, a, and b", "a and c", "b and c" or "a, b, and c", where a, b, and c may be singular or plural.

To facilitate understanding of embodiments of this application, the following first briefly describes some terms used in this application.
1. An in-vehicle key manager system may be a system for managing keys of in-vehicle devices. The in-vehicle key manager system may implement functions such as key creation, key storage, or key distribution, and is used to manage keys of the in-vehicle devices, to ensure secure communication between the in-vehicle devices.
2. Hardware security mechanism: network security specifications for hardware modules. The hardware security mechanism may be used to implement key storage and a hardware encryption and decryption algorithm in the automobile field, and support a user in writing a program to add an encryption algorithm and the like, to extend a function such as an encryption form. For example, the hardware security mechanism may be applied to an in-vehicle electronic control unit (electronic control unit, ECU) or a cloud device, and is responsible for secure storage and secure computation of a key in the ECU or a key in the cloud. The hardware security mechanism may include a hardware security extension (secure hardware extension, SHE) mechanism (or referred to as SHE specifications), a hardware security module (hardware security module, HSM) mechanism, or the like.

In the SHE mechanism, content such as a memory slot used for key update, key information in the key memory slot, a security verification condition of a key, and an interface supported by the SHE is defined. For example, in a definition of a memory slot used for key update in the SHE specifications, some key memory slots used for key update and types and addresses of the memory slots are described, as shown in Table 1.

**Table 1 Schematic table of memory slots**

| Name of key memory slot | Address (address) (hexadecimal) | Memory area (memory area) |
|---|---|---|
| SECRET_KEY | 0 | Read-only memory |
| MASTER_ECU_KEY | 1 | Non-volatile (non-volatile) memory slot |
| BOOT_MAC_KEY | 2 | |
| BOOT_KEY | 3 | |
| KEY_1 | 4 | |
| KEY_2 | 5 | |
| KEY_3 | 6 | |
| KEY_4 | 7 | |
| KEY_5 | 8 | |
| KEY_6 | 9 | |
| KEY_7 | a | |
| KEY_8 | b | |
| KEY_9 | c | |
| KEY_10 | d | |
| RAM_KEY | e | Volatile (volatile) memory slot |

As shown in Table 1, "non-volatile" indicates a non-volatile memory slot used to store a fixed key or a security check code BOOT_MAC used for secure boot.

"Volatile" indicates a volatile memory slot.

The "address" column lists location numbers of memory slots that can store keys in the SHE mechanism. The following describes main key memory slots in the embodiments of this application and functions of the key memory slots.

MASTER_ECU_KEY may be used to store a master key of the current ECU, and is used only to update the master key of the current ECU or another key in the SHE. MASTER_ECU_KEY may be preset in a production line when each component is produced.

BOOT_MAC_KEY and BOOT_MAC are respectively a key used for software integrity verification and a software integrity check code during SHE secure boot.

KEY_1 to KEY_10 may be used to store a symmetric key (or referred to as a cipher key, an integrity key, or the like) for in-vehicle communication between devices. In this embodiment of this application, when building of the in-vehicle key is discussed, according to the SHE specifications, the in-vehicle key may be stored in these memory slots. KEY_1 to KEY_10 need to be verified based on MASTER_ECU_KEY or an existing key, and may be separately loaded into each component in the vehicle by using a tool from the vehicle manufacturer or the cloud.

RAM_KEY may be used for any purpose, and may be operated by running the following three commands:
CMD_LOAD_PLAIN_KEY: Stores a key in this location in plaintext. The SHE verifies an input parameter of this command. This means that any caller can store any value in this location by using this command, and therefore no security guarantee is provided.

CMD_LOAD_KEY: Stores a key in this location in ciphertext. The SHE verifies integrity of an input parameter and then decrypts the parameter. The input parameter may be understood as a parameter that is input. The input parameter may be used to transfer a parameter to a command such as CMD_LOAD_KEY for use.

CMD_EXPORT_RAM_KEY: Exports, in ciphertext, a key stored in this location. The exported parameters include M1 to M5. M1 to M3 can be used as input parameters of CMD_LOAD_KEY Then M1 to M3 can be stored in RAM_KEY in ciphertext by running the CMD_LOAD_KEY command (or SECRET_KEY is used for encryption and integrity protection).

In the SHE specifications, key update may be implemented based on the memory slots in Table 1.

In addition, in the SHE specifications, in addition to the memory slots in Table 1, key information related to the key memory slots is also defined. As shown in Table 2, when a key is loaded into a memory slot, each key may include some additional information, for example, a related identifier such as a writing protection identifier and a secure boot failure identifier. The related identifiers may be shown in Table 2.

**Table 2 Schematic table of other identifiers used in key storage**

| | Write protection (writing protection) | Secure boot failure (secure boot failure) | Debugger activation (debugger activation) | Wildcard unique identification item (wildcard UID) | Key usage (key usage) | Plain key (plain key) | Counter (counter) | Overall data (overall data [bit]) |
|---|---|---|---|---|---|---|---|---|
| MASTER _ECU_K EY | X | X | X | X | | | X | 160 |
| BOOT_M AC_KEY | X | | X | X | | | X | 159 |
| BOOT_K EY | X | | X | X | | | X | 159 |
| KEY_<n> | X | X | X | X | X | | X | 161 |
| RAM_KE Y | | | | | | X | | 129 |
| SECRET_ KEY | | X⁵ | X⁵ | | | | | 128 |
| UID | | | | | | | | 120 |

"X" indicates that security verification needs to be performed by using an existing key when a key is loaded.

"Write-protection" indicates write protection. If write-protection is set to 1, the key cannot be updated even if the key is leaked. If write-protection is 0, update is allowed.

The wildcard unique identification item (wildcard unique identification item, wildcard UID) may indicate whether a wildcard UID can be used to load (or referred to as overwrite update) a key into a corresponding memory slot. If the wildcard UID is 1, the key can be loaded by using the wildcard UID. If the wildcard UID is 0, the key cannot be loaded by using the wildcard UID. According to the SHE specifications, when the value of UID is 0, the value of wildcard UID is also 0. The UID is a device identifier. For example, the UID may be an identification number of an ECU.

"Counter" indicates an update counter of a key. Each time the key is updated, the counter value increases by 1. The counter can be used to prevent replay attacks.

In the definition of interfaces supported by the SHE in the SHE specifications, some external interfaces supported in the SHE mechanism are described, as shown in Table 3.

**Table 3 Schematic table of interfaces supported by the SHE**

| Interface | Description |
|---|---|
| CMD_GENERATE_MAC | Generates a message authentication code. |
| CMD_VERIFY_MAC | Verifies a message authentication code. |
| CMD_LOAD_KEY | Securely stores a key, where the key is encrypted and integrity protected. |
| CMD_LOAD_PLAIN_KEY | Stores a key in plaintext, which is insecure. |
| CMD_EXPORT_RAM_KEY | Exports a key from RAM_KEY. |

3. An electronic control unit (electronic control unit, ECU) can be an electronic control apparatus based on a single-chip microcomputer, has powerful mathematical operation and logic judgment, data management, and data processing functions. The ECU can be divided into a hardware part and a software part. The hardware part is a physical component of the ECU, and the software part is an instruction and data system that implements the ECU control function. The ECU processes a signal sent by a sensor and controls, by using a control instruction, a corresponding execution component to perform an operation according to the instruction.

4. A pre-shared key (pre-shared key, PSK), also referred to as a shared key, is a key used for identity authentication during encryption. For example, before data exchange is performed between devices, a PSK may be shared, and communication is maintained between the devices, so that mutual identity authentication is performed before another identity authentication method such as "user name + password" is applied.

5. A cipher-based message authentication code (cipher-based message authentication code, CMAC) can be used as a message signature.

6. A memory slot (memory slot) may be a logical address or a physical address of the memory slot. For example, the location of the first memory slot may be a memory slot 1, and the location of the second memory slot may be a memory slot 2. In this case, the memory slot 1 and the memory slot 2 may be different or may be the same.

7. A first device may be a cloud device, an in-vehicle device, another terminal device, or the like. The first device may support key update based on the SHE mechanism or the HSM mechanism.

The cloud device may be a server configured to deliver a key, or may be a proxy server. For example, the proxy server may be a server serving a vehicle fleet. This is not limited in the embodiments of this application.

The in-vehicle device may be a vehicle in any form that supports key update, or may be any component of the vehicle, such as an ECU, or a vehicle-assisted device (such as a vehicle charging pile) in any form. This is not specifically limited in this embodiment of this application.

Alternatively, the cloud device may be a key client-side server configured to update a key, or may be a vehicle fleet server or any other possible server that obtains and updates a key from the client-side server.

The terminal device may also be user equipment (user equipment, UE), a mobile station (mobile station, MS), a mobile terminal (mobile terminal, MT), or the like. The terminal device may be a mobile phone (mobile phone), a smart television, a wearable device, a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

To better understand the methods according to the embodiments of this application, the following first describes an application scenario to which the embodiments of this application are applicable.

The key processing methods according to the embodiments of this application may be applied to a scenario in which various types of vehicles update keys, for example, in a scenario in which a vehicle such as an intelligent connected vehicle, a self-driving vehicle, or a new energy vehicle interacts with a cloud device to update a key.

Generally, when a vehicle key needs to be updated, the vehicle needs to use a dedicated tool to connect to the cloud KMS of the vehicle at a specially authorized maintenance center or the factory, and then connect to in-vehicle devices one by one to load the new key, to update the key.

For example, the hardware security mechanism is the SHE mechanism. The following describes in detail loading of a key based on the SHE mechanism. In the SHE mechanism, when each key is loaded by using CMD_LOAD_KEY, security verification conditions of the key needs to be met. For example, the security verification conditions may be shown in Table 4.

**Table 4 Schematic table of security verification conditions**

| | Non-volatile | | | | Volatile ROM | | | Plaintext (plaintext) |
|---|---|---|---|---|---|---|---|---|
| Slot to update | MASTER_ ECU_KEY | BOOT _MAC _KEY | BOOT _KEY | KEY_ <n> | RAM_K EY | SECRET_ KEY | UID | |
| MASTER_ECU _KEY | X | | | | | | | |
| BOOT_MAC_ KEY | X | X | | | | | | |
| BOOT_KEY | X | X | | | | | | |
| KEY_<n> | X | | | X | | | | |
| RAM_KEY | | | | X | | X | | X |
| SECRET_KEY | | | | | | | | |
| UID | | | | | | | | |

"X" indicates that an existing key (column) needs to be used for security verification when a key (row) is loaded. For example, the existing key is used to derive a cipher key K1 and an integrity key K2 to protect input parameters of CMD_LOAD_KEY.

For example, when the user needs to load a new key into the KEY_<n> location, the user also needs to know in advance a key currently stored in MASTER_ECU_KEY or a key stored in the KEY_<n> location to perform security verification. KEY_<n>: indicates KEY_1 to KEY_10.

Therefore, according to the SHE mechanism, when a key (such as MASTER_ECU_KEY, BOOT_MAC_KEY, BOOT_MAC or KEY_<n>) needs to be loaded into a location, the original key or MASTER_ECU_KEY stored in the location needs to be known in advance.

For example, when the user needs to update keys of in-vehicle devices, the user may drive the vehicle to a specially authorized maintenance center. Professional maintenance personnel can update keys based on the SHE mechanism. For example, when the maintenance personnel load a new key into the MASTER_ECU_KEY location in the SHE, the maintenance personnel can use a tool to link to the cloud interface, obtain a current value of MASTER_ECU_KEY in the SHE, and build input parameters of the CMD_LOAD_KEY command based on the current value of MASTER_ECU_KEY. Further, the tool can be used to connect to each device interface in the vehicle, and then the CMD_LOAD_KEY command is run to load the new key. During the loading process, the SHE performs security verification (such as integrity check and decryption) on the input parameters in the CMD_LOAD_KEY command based on the value stored in the current MASTER_ECU_KEY location. After the verification succeeds, the new key carried in the command can be stored in the MASTER_ECU_KEY location to complete loading of the key.

However, in the foregoing method for updating a key based on the hardware security mechanism, a series of complex steps need to be performed, resulting in low efficiency of key update. In addition, when a key is loaded based on the hardware security mechanism, if some devices restart abnormally during the update process, and the vehicle may stop running, the vehicle can be towed to the factory or transported the vehicle to the maintenance store by another vehicle, and a dedicated tool can be used to connect to each device to update the key. In this case, the restarted device may still use the old key, but a central server (server) has a new key. Consequently, the restarted device cannot securely communicate with the central server, and the key cannot be updated.

In the key processing methods according to the embodiments of this application, key update operations can be simplified, and efficiency of key update can be improved.

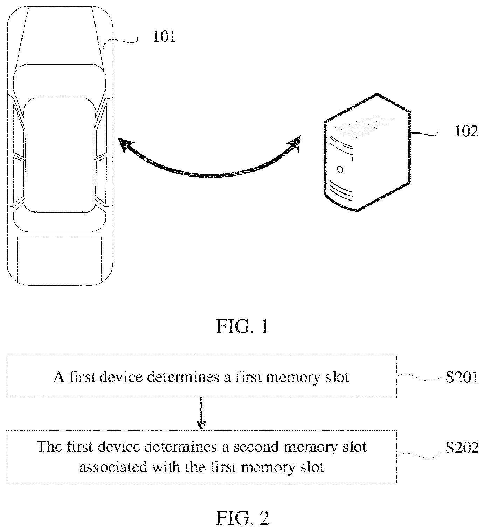

For example, FIG. 1 is a schematic diagram of an example of a key processing scenario according to an embodiment of this application.

As shown in FIG. 1, the scenario may include a car 101 and a cloud device (for example, a server) 102. The car 101 includes a first component whose key needs to be updated. For example, the first component may be an ECU. For example, when a user needs to update the key of the first component in the car, the user may trigger, on a screen of a head unit or a mobile phone, a corresponding button used for updating the key. In this way, the car 101 and the cloud device 102 may exchange data based on a hardware security mechanism by using a key processing method according to an embodiment of this application, so that the cloud device 102 transmits a new key to the first component in the car 101, to complete key update.

The following describes, by using several example embodiments, the technical solutions of this application and how the foregoing technical problem is resolved in the technical solutions of this application. The following embodiments may be implemented independently or combined with each other, and same or similar concepts or processes may not be repeatedly described in some embodiments.

FIG. 2 is a schematic flowchart of a key processing method according to an embodiment of this application. As shown in FIG. 2, the method includes:
S201: A first device determines a first memory slot.
S202: The first device determines a second memory slot associated with the first memory slot.

The first memory slot is used to store a first key, the second memory slot is used to store a second key, and the second key is an update key of the first key.

It may be understood that the first memory slot may be one memory slot, or may be a plurality of memory slots, and the second memory slot may be one memory slot, or may be a plurality of memory slots. In this embodiment of this application, a third memory slot may further exist. For example, the first device determines the first memory slot, and the first device determines the second memory slot and the third memory slot that are associated with the first memory slot. For another example, the first device determines the first memory slot and the third memory slot, and the first device determines the second memory slot that is associated with the first memory slot and the third memory slot. This embodiment of this application imposes no limitation on a quantity, a property, or the like of the memory.

Based on the hardware security mechanism in this embodiment of this application, the second memory slot may be predefined by the hardware security mechanism, or the second memory slot is determined according to a first command received by an interface in the hardware security mechanism. The first command may be a command generated based on setting of the second memory slot by a user. The predefinition may be understood as that the user does not need to set the second memory slot, and the hardware security mechanism can automatically generate the second memory slot based on a setting of the hardware security mechanism.

In a possible implementation, the first memory slot may be understood as a master memory slot, and the second memory slot may be understood as a slave memory slot. The first memory slot may be a memory slot that is always used to store a key. The second memory slot may be a memory slot temporarily set or fixedly set for storing a key. The temporary setting may be that a second memory slot is temporarily set for use, and is released after being used; and the fixed setting may be that a second memory slot is set before being used, and the second memory slot is maintained after being used.

For example, in a temporary setting scenario, before the key is updated, the hardware security mechanism may temporarily set a second memory slot for the first memory slot. After the key is updated, the second memory slot may be released. In this scenario, the second memory slot may be used when an in-vehicle KMS updates the key. In another scenario and a service, the second memory slot cannot be used, and the second memory slot cannot be sensed.

For example, in a fixed setting scenario, the second memory slot may be set in advance before the key is updated, and after the key is updated, the second memory slot may continue to be maintained. In this scenario, after the in-vehicle KMS updates the key, in another scenario and service, it may be determined, based on a service requirement, whether the second memory slot needs to be accessed.

The hardware security mechanism may be an extended hardware security mechanism. For example, the hardware security mechanism may be an extended SHE mechanism or an extended HSM mechanism. For example, the hardware security mechanism is an extended SHE mechanism. In this embodiment of this application, the extended SHE mechanism defines content such as additional storage information during SHE key storage, and a first command supported by the SHE.

Optionally, when the first memory slot and the second memory slot are used to update the key, the following storage information of the key may be used. The extended SHE mechanism may include additional storage information when the extended SHE is used to store the key based on Table 2, as shown in Table 5.

**Table 5 Additional storage information when the SHE key is stored**

| | Build status (buildstatus (1 bit)) | Support update (supportupdate (1 bit)) | Key usage (inuse (1 bit)) | Slave memory slot (isslave (1 bit)) | Memory slot pair (pairslot (8 bits)) |
|---|---|---|---|---|---|
| MASTER_ECU_KEY | X | X | X | X/- | X/- |
| BOOT_MAC_KEY | X/- | X/- | X/- | X/- | X/- |
| BOOT_KEY | X/- | X/- | X/- | X/- | X/- |
| KEY_<n> | X | X | X | X/- | X/- |
| RAM_KEY | | | | | |
| SECRET_KEY | | | | | |
| UID | | | | | |

X indicates that content in the current row may be included during storage. For example, when the build status buildstatus of MASTER_ECU_KEY is X, it may indicate that when MASTER_ECU_KEY is stored, content of buildstatus may be included; or when MASTER_ECU_KEY is stored, support update supportupdate, key usage inuse, memory slot slave isslave, and a memory slot pair slot pairslot in the corresponding row may include content of buildstatus.

X/- indicates that it may be determined, according to a requirement, whether content of the item/row is included during storage, for example, may be customized according to a user service.

Blank indicates that content of the item or row may not be included during storage.

As shown in Table 5, storage information of the first key may include:

First indication information: information used to indicate a key build status. A field format of the first indication information may be: build status buildstatus (1 bit). When buildstatus is 0, it indicates that no key is built in the memory slot, or it is understood that a key is invalid in a corresponding storage location; or when buildstatus is 1, it indicates that a key in the memory slot is successfully built, or it is understood that the key is valid in a corresponding storage location.

Second indication information: information used to indicate whether a key supports update. A field format of the second indication information may be: support update supportupdate (1 bit). When supportupdate is 1, it may indicate that the memory slot supports update; or when supportupdate is 0, it may indicate that the memory slot does not support update, and a value of pairslot can be ignored.

Third indication information: information used to indicate whether a key is being used. A field format of the third indication information may be: key usage inuse (1 bit). When inuse is 1, it may indicate that a key stored in the location is being used; or when inuse is 0, it may indicate that a key stored in the location is not being used. For a pair of keys, there is always one key whose "inuse" is set to 1.

Fourth indication information: information used to indicate that a key is an un-updated key or an updated key. A field format of the fourth indication information may be: inuse + buildstatus. If the value of inuse is 0 and the value of buildstatus is 1, the key in the memory slot is valid but cannot be used in a service. If the value of buildstatus is 0, the inuse flag can be ignored.

Therefore, inuse and buildstatus can be used together to mark the new key as "built successfully + in use", or mark the old key as "built successfully + disabled". Similarly, inuse, buildstatus, and counter can be used together to determine whether the key is a new key or an old key.

Fifth indication information: information used to indicate that a memory slot of the first key is the first memory slot or the second memory slot. A field format of the fifth indication information may be as follows: memory slot slave isslave (1 bit). When isslave is 0, it may indicate that the memory slot is a master memory slot; or when isslave is 1, it may indicate that the memory slot is a slave memory slot. A default value of isslave may be 0. It should be noted that isslave is valid only when supportupdate is set to 1. For the pairing (pair) solution, this field may be omitted. For the slave (slave) solution, this field is included.

Sixth indication information: information used to indicate a memory slot paired with the memory slot of the first key. A field format of the sixth indication information may be: memory slot pair slot pairslot (8 bits). It should be noted that isslave is valid only when supportupdate is set to 1. For the pairing solution, this field may be included. For the slave solution, this field may not be included.

Optionally, when the key is updated by using at least the first memory slot and the second memory slot, the following first command may be received based on an interface. The extended SHE mechanism in this embodiment of this application may be: Based on Table 4, an interface in the extended SHE is used to receive the first command. For example, the first command may include: a command used to instruct to pair the first memory slot and the second memory slot, a command used to instruct to unpair the first memory slot and the second memory slot, a command used to instruct to update a key, a command used to instruct to clear an un-updated key, a command used to instruct to query key information in the first memory slot and/or the second memory slot, or a command used to instruct to transfer a key from one memory slot to another memory slot.

First pairing command: used to set the first memory slot and the second memory slot as a pair. A field format of the first pairing command may be CMD_SET_KEY_PAIRSLOT. First unpairing command: used to unpair the first memory slot and the second memory slot. A field format of the first unpairing command may be CMD_RESET_KEY_PAIRSLOT.

First command for setting a slave memory slot: used to set a second memory slot for the first memory slot. A field format of the first command for setting a slave memory slot may be CMD_SET_KEY_SLAVESLOT.

First command for unbinding a slave memory slot: used to unbind a second memory slot from the first memory slot. A field format of the first command for unbinding a slave memory slot may be CMD_RESET_KEY_SEAVESEOT.

First command for updating a key: used to store a new key in a first memory slot (or a second memory slot) specified in the SHE. A field format of the first command for updating a key may be CMD_LOAD_KEY.

First command for clearing a key before update: used to clear the second key in the second memory slot associated with the first memory slot. A field format of the first command for clearing a key before update may be CMD RESET PAIR_KEYINFO.

Second command for clearing a key before update: used to overwrite the content of the second memory slot to the first memory slot specified by an input parameter, and clear the content of the second memory slot. A field format of the second command for clearing a key before update may alternatively be CMD_SWITCH_SLAVE_KEYINFO.

First command for querying key information in a memory slot: used to query key information (excluding the key) of the first memory slot (or the second memory slot). For example, the key information may include information such as a key flag, a counter, or a pairslot. If there is pair or slave information, key information corresponding to the pairslot may also be returned. A field format of the first command for querying key information in a memory slot may be CMD_GET_KEY_INFO.

First command for transferring a key from one memory slot to another memory slot: used to completely transfer a key from one memory slot to another memory slot. A field format of the first command for transferring a key from one memory slot to another memory slot may be CMD_MOVE_KEY_SLOT.

First command for obtaining a key from a second memory slot: used to instruct to obtain a key from the second memory slot. A field format of the first command for obtaining a key from a second memory slot may be CMD_SET USE_SLAVE KEYINFO. For example, C1VID_SET USE SLAVE_KEYINFO may also notify the SHE that the key in the specified memory slot needs to be read from the second memory slot when the key in the specified memory slot is subsequently used. If the first memory slot is not bound to the second memory slot, the command fails to be executed.

First command for obtaining a key from a first memory slot: used to instruct to obtain a key from the first memory slot. A field format of the first command for obtaining a key from the first memory slot may be CMD_RESET_USE_SLAVE_KEYINFO. For example, CMD_RESET_USE_SLAVE_KEYINFO may also notify the SHE that the key in the specified memory slot needs to be read from the first memory slot when the key is subsequently used. Regardless of whether the first memory slot is bound to the second memory slot, the command returns success.

Based on the embodiment corresponding to FIG. 2, in a possible implementation, S202 further includes: the first device determines, based on the hardware security mechanism, the second memory slot associated with the first memory slot. The hardware security mechanism is used to update the first key.

For example, the first memory slot may be understood as a memory slot for storing the first key, and the second memory slot may be understood as a slave memory slot of the first memory slot. The first device may determine, based on a method for setting a slave memory slot, for example, who specifies a slave memory slot, or whether a same or different slave memory slots are used when different keys are updated, and a combination of the foregoing manners, how to configure a slave memory slot for the first memory slot based on the hardware security mechanism. The setting method may be temporary setting or fixed setting. Specifying the slave memory slot may be specifying by a user or automatically specifying by the SHE hardware mechanism. Table 6 shows a combination of the foregoing factors and impact of each combination on a user and a service.

**Table 6 Setting combinations of the slave memory slot and analysis of impact on a user and a service**

| No. | Time for setting the slave memory slot | Who specifies the slave memory slot? | Slave memory slots of different keys | Can the slave memory slot be sensed by a user? | If the slave memory slot needs to be sensed in a service, can it be implemented? | If the slave memory slot does not need to be sensed in a service, can it be implemented? | If the slave memory slot needs to be sensed in the update service of the in-vehicle KMS to support power-off restart, can it be implemented? |
|---|---|---|---|---|---|---|---|
| 1 | Temporary setting | User-specified | Same | Restricted | No | Yes, but the key needs to be moved (moved). | The KMS is temporarily specified. |
| 2 | | | Different | Yes | | | |
| 3 | | Hardware mechanism | Same | Restricted | | | The hardware security mechanism needs to support use of a key in the slave memory slot. |
| 4 | | | Different | Yes | | | |
| 5 | Fixed setting | User-specified | Same | Restricted | | | User-specified, and it can be implemented |
| 6 | | | Different | Yes | Yes | | |
| 7 | | Hardware mechanism | Same | Restricted | No | | The hardware security mechanism needs to support use of a key in the slave memory slot. |
| 8 | | | Different | Yes | Yes | | |

As shown in Table 6, the service may be understood as another service other than the in-vehicle KMS, for example, a service such as a secure information communication service inside or outside a vehicle.

If the slave memory slot needs to be sensed in a service, it may be understood as that the service may use the second memory slot. For example, when the key is updated, the first memory slot and the second memory slot may be alternately used to store an updated key in the service.

If the slave memory slot does not needs to be sensed in a service, it may be understood as that the first memory slot is used in the service. For example, when a key is updated, the first memory slot may be used to store an updated key in the service.

A user may be understood as a service in which a key stored in the hardware security mechanism needs to be used. For example, the user may include a service such as an in-vehicle KMS or an in-vehicle data communication service.

A slave memory slot needs to be sensed in the update service of the in-vehicle KMS to support power-off restart: It may be understood that, when the in-vehicle KMS updates a key, some in-vehicle devices may experience an exception such as power-off restart. To ensure that a device is still managed by the vehicle after experiencing power-off restart or the like, the in-vehicle KMS needs to continue a process of accessing a key temporarily stored in the second memory slot when updating the key.

Restricted: It may be understood that in a key update process, to support that the key can continue to be updated after the device experiences power-off restart, the in-vehicle KMS cannot temporarily access the second memory slot.

Moving is required: If existence of a slave memory slot does not need to be sensed in a service, and it is expected to always use a key in a same memory slot for secure communication before and after key update, the hardware security mechanism needs to support moving a key from one memory slot (for example, the second memory slot) to another memory slot (for example, the first memory slot) after key update. Moving may be an independent function provided and operated by a user, or may be operated by a system based on the hardware security mechanism.

Fixed setting: For the hardware security mechanism, there are three manners for implementing fixed setting. In one implementation, the fixed setting may be limited by using hardware logic during production of a security chip. In another implementation, the fixed setting may be limited by using firmware logic in the hardware security mechanism, and the fixed setting may be upgraded with a software package. In still another implementation, the fixed setting may be set by a user.

A user specifies a slave memory slot: It may be understood that the hardware security mechanism needs to provide a corresponding user interface to support setting of the slave memory slot.

A hardware mechanism specifies a slave memory slot: For the hardware security mechanism, the slave security area can be set in two manners.

In an implementation, a user interface may be provided. When a user sets a slave memory slot for a key, a specific location of the slave memory slot may be automatically specified by the hardware mechanism. In this manner, corresponding temporary setting may be performed, or corresponding fixed setting may be performed.

In another implementation, a user interface may not be provided.

Slave memory slot for different keys: If the same slave memory slot is used, occupancy of the memory slot can be reduced. If different slave memory slots are used, key backup can be supported while key update is supported, so that key reliability is improved, and concurrent update of a plurality of different keys is supported.

For example, in this embodiment of this application, methods for setting a slave memory slot may be divided based on whether it can be implemented when a slave memory slot needs to be sensed in a service. For example, the methods may be divided into two types: a solution in which it can be implemented when the slave memory slot needs to be implemented in a service is referred to as a pairing solution, and it may be understood that in the pairing solution, the slave memory slot may be used in the service; and a solution in which it cannot be implemented when the slave memory slot needs to be sensed in a service is referred to as a slave solution, and it may be understood that in the slave solution, the master memory slot is used in the service. Specifically, correspondences between different combinations and different solutions are shown in Table 7.

**Table 7 Correspondences between different combinations and the pairing solution and the slave solution**

| No. | Time for setting the slave memory slot | Who specifies the slave memory slot? | Slave memory slots of different keys | Can the slave memory slot be sensed by a user? | If the slave memory slot needs to be sensed in a service, can it be implemented? | Corresponding solution | Concurrency: Is concurrent update of a plurality of different keys supported? |
|---|---|---|---|---|---|---|---|
| 1 | Temporary setting | User-specified | Same | Restricted | No | Slave solution | Concurrency is not supported, but serial mode is supported. |
| 2 | | | Different | Yes | | | Supported |
| 3 | | Hardware mechanism | Same | Restricted | | | Concurrency is not supported, but serial mode is supported. |
| 4 | | | Different | Yes | | | Supported |
| 5 | Fixed setting | User-specified | Same | Restricted | | | Concurrency is not supported, but serial mode is supported. |
| 6 | | | Different | Yes | Yes | Pairing solution | Supported |
| 7 | | Hardware mechanism | Same | Restricted | No | Slave solution | Concurrency is not supported, but serial mode is supported. |
| 8 | | | Different | Yes | Yes | Pairing solution | Supported |

In this embodiment of this application, setting of the slave memory slot and a key update process are described by using the pairing solution and the slave solution as examples.

It should be noted that the first device may be an in-vehicle device, or may be a cloud device. When the first device is an in-vehicle device, the second device is a cloud device; or when the first device is a cloud device, the second device is an in-vehicle device. An implementation corresponding to a scenario in which the first device is an in-vehicle device and an implementation corresponding to a scenario in which the first device is a cloud-end device are different.

For example, when the first device is an in-vehicle device, and the second device is a cloud device, a key processing method according to an embodiment of this application may include the following content.

A method for setting, by the first device, the slave memory slot for storing a first key includes: the first device receives a first message from a second device; the first device verifies first encryption information; and the first device configures a second memory slot for the first memory slot if the first encryption information is successfully verified. The second memory slot may be understood as a slave memory slot; and the first encryption information is generated by the second device based on a hardware security mechanism.

In this embodiment of this application, the first message includes the first encryption information used to indicate a first memory slot and a second memory slot; and the first encryption information includes a first parameter M1 and a second parameter M2, where M1 is related to information in the first memory slot and information in the second memory slot, and M2 is related to M1 and the first key.

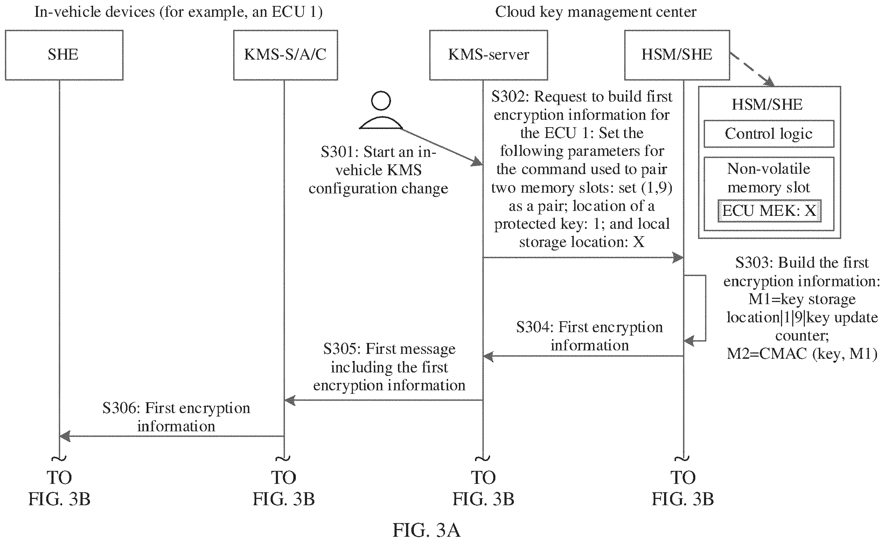

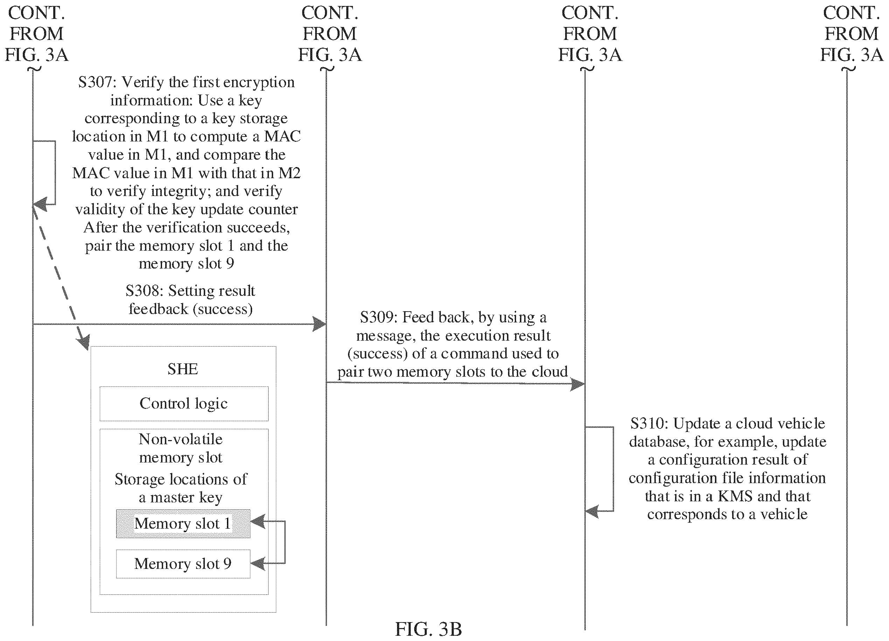

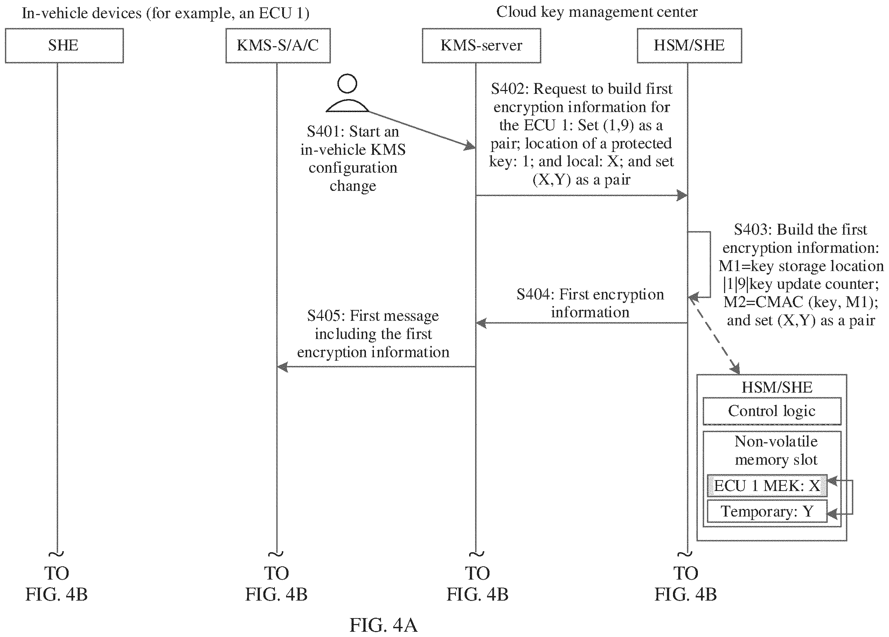

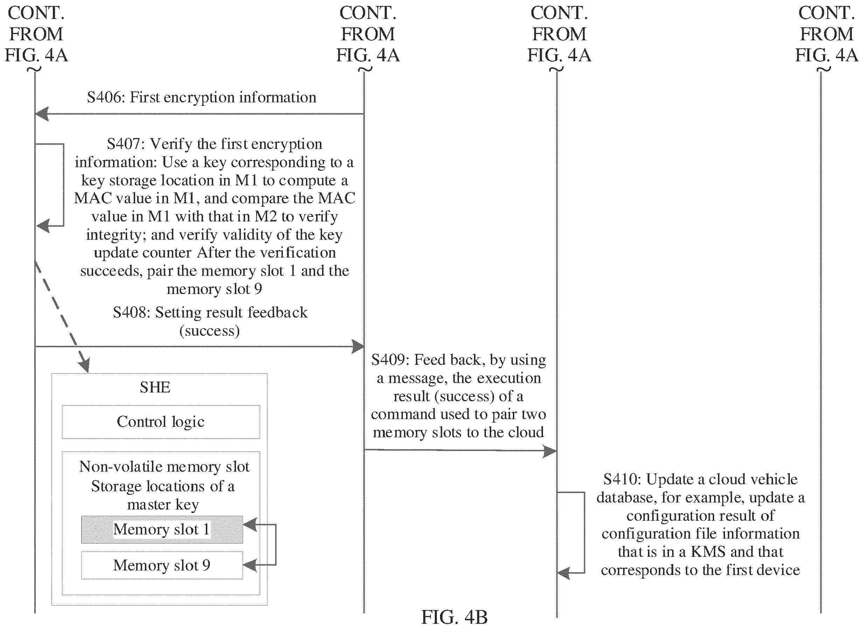

On the basis of setting the slave memory slot based on the pairing solution, the pairing solution may be further divided into two manners based on a quantity of memory slots provided by the cloud device to support key update, including manner 1 and manner 2. For example, in manner 1, the cloud device sets one memory slot to support key update (as shown in the embodiment corresponding to FIG. 3A and FIG. 3B); and in manner 2, the cloud device sets two memory slots to support key update (as shown in the embodiment corresponding to FIG. 4A and FIG. 4B).

Combinations corresponding to the pairing solution are shown in Table 8.

**Table 8 Combinations corresponding to the pairing solution**

| No. | Time for setting the slave memory slot | Who specifies the slave memory slot? | Slave memory slots of different keys | Can the slave memory slot be sensed by a user? | If the slave memory slot needs to be sensed in a service, can it be implemented? | Solution |
|---|---|---|---|---|---|---|
| 6 | Fixed setting | User-specified | Different | Yes | Yes | Pairing solution |
| 8 | | Hardware mechanism | Different | Yes | Yes | Pairing solution |

For the hardware security mechanism (such as the SHE mechanism), a memory slot is automatically specified. However, when the user determines whether to enable a slave memory slot for a key, the slave memory slot does not need to be specified for each interface in the SHE user function extension summary. For example, when the hardware security mechanism supports automatic setting of the memory slot, the user can enable a key to use the slave memory slot, or the user can disable a key from using the slave memory slot. Based on the following solution, a corresponding parameter may be properly modified, and details are not described herein again.

When a security chip with the fixed setting mode is produced, if the fixed setting mode is defined by using the hardware logic in the hardware security mechanism, or the fixed setting mode is defined by using firmware logic in the hardware security mechanism, but the fixed setting can be upgraded with a software package, an interface for a user setting function does not need to be provided, but an interface for using a key in a slave memory slot needs to be provided. For example, the slave memory slot may be specified by hardware logic or fixed logic, and the slave memory slot is used based on an interface during key update. With reference to the following solution, the processing procedure may be easily obtained, and details are not described herein again.

For example, a method for setting a slave memory slot for a first memory slot is described by using an example in which a slave memory slot (for example, No. 6 in Table 8) is specified by a user based on fixed setting in the pairing solution. For example, two memory slots are configured as a pair. It may be understood that the pairing solution below may be based on a manner in which a slave memory slot is specified by a user, and details are not described below.

For example, an example in which the first memory slot is MASTER_ECU_KEY is used to describe that in the pairing solution, a memory slot is paired with MASTER_ECU_KEY by using a CMD_SET_KEY_PAIRSLOT command before key update. For example, the memory slot at the memory slot 9 is paired with MASTER_ECU_KEY, as shown in Table 9.

**Table 9 Schematic table of setting a memory slot 1 and the memory slot 9 as a pair and supporting update of MASTER_ECU_KEY**

| Content (content) | memory slot | pairslot | Description |
|---|---|---|---|
| MASTER_ECU_KEY | 1 | 9 | KEY_6 is paired with the memory slot 1, and |
| | | | is used to support update of the key of MASTER_ECU_KEY. |
| BOOT_MAC_KEY | 2 | | |
| BOOT_MAC | 3 | | |
| KEY_1 | 4 | | |
| KEY_2 | 5 | | |
| KEY_3 | 6 | | |
| KEY_4 | 7 | | |
| KEY_5 | 8 | | |
| KEY_6 | 9 | 1 | The memory slot 9 is paired with MASTER_ECU_KEY, and is used to support update of the key of MASTER _ ECU_KEY |
| KEY_7 | 10 | | |
| KEY_8 | 11 | | |
| KEY_9 | 12 | | |
| KEY_10 | 13 | | |

The memory slot KEY_6 corresponding to the location of the memory slot 9 may be understood as a second memory slot. For ease of understanding, the slave memory slot is referred to as the second memory slot below.

Manner 1: The cloud device sets a memory slot to support key update. For example, FIG. 3A and FIG. 3B are a schematic flowchart of setting a second memory slot according to an embodiment of this application. As shown in FIG. 3A and FIG. 3B, the procedure may include a target device (for example, an ECU 1) in a vehicle and a cloud key management center.

As shown in FIG. 3A and FIG. 3B, the in-vehicle devices may include:
an in-vehicle SHE (or HSM), mainly configured to manage keys on the current device; and
an in-vehicle KMS-S/A/C (which may include a KMS-server (server), a KMS-agent (agent), or a KMS-client (client)), which may be a KMS logical functional module deployed in the vehicle. In this embodiment of this application, the KMS-S/A/C may be configured to assist in managing an in-vehicle key update function, and is responsible for pairing two memory slots in the SHE of the target device. The in-vehicle KMS-S/A/C may be specific to each in-vehicle device. The deployed KMS logical function may be an in-vehicle KMS-server (compared with other in-vehicle devices), an in-vehicle KMS-agent, or an in-vehicle KMS-client.

Specifically, the in-vehicle KMS-server may be responsible for exchanging messages with the KMS-server in the cloud key management center. In this solution, the device is used to assist in managing functions such as pair configuration and key update on the device and other in-vehicle devices.

In-vehicle KMS-agent: For some devices that cannot directly communicate with the cloud by using a message, an agent may be required for forwarding and management. For example, the forwarding and management device may include an ECU on a controller area network (controller area network, CAN) or CAN flexible data-rate (flexible data-rate, FD) bus; and the ECU needs to be managed by using a device such as a gateway, a vehicle running dynamic control system (vehicle running dynamic control system, VDC), a multi-domain controller (multi-domain controller, MDC), or a continuous damping control (continuous damping control, CDC) system.

In-vehicle KMS-client: manages another device than the KMS-agent and the KMS-server.

The cloud key management center may include:
a cloud KMS-server, configured to set a pair for different vehicles or SHEs, HSMs, or the like in different devices, generate related command input parameters, and transfer the command input parameters to an SHE, an HSM, or the like of each in-vehicle device; and
a cloud HSM/SHE, that provides a secure hardware environment for the cloud key management center, generates an input parameter of a command like CMD_SET_KEY_PAIRSLOT, and sets pairs for the HSMs or the SHEs in different vehicles or devices.

For example, the first device is an in-vehicle device, and the second device is a cloud device. As shown in FIG. 3A and FIG. 3B, a procedure based on manner 1 may include the following steps.

S301: A user starts a KMS configuration change of the first device.

For example, the KMS configuration change may be a configuration change triggered based on a second memory slot set by a user. For example, when the user needs to update an in-vehicle key, the user may pair two memory slots on a screen of a head unit or a mobile phone. In response to a setting operation of the user, an in-vehicle KMS configuration change may be started in the cloud key management center.

S302: The KMS-server in the second device requests to build first encryption information for an ECU 1.

In this embodiment of this application, the first encryption information may include the following parameters: (1,9) are paired; location of a protected key: 1; and local storage location of a key: X. The KMS-server in the second device sends the foregoing data to the HSM/SHE in the second device.

The first encryption information may be built by using the first pairing command CMD_SET_KEY_PAIRSLOT that is used for pairing the first memory slot and the second memory slot. For example, in response to the operation of starting, by the user, the KMS-server configuration change of the first device, the KMS-server of the second device may request to build an input parameter of the CMD_SET_KEY_PAIRSLOT command for the target device.

For example, function descriptions of CMD_SET_KEY_PAIRSLOT may be shown in Table 10.

**Table 10 Schematic table of the function descriptions of CMD_SET_KEY_PAIRSLOT**

| Parameter (parameter) | Direction (direction) | Width (width)/Bits (bits) |
|---|---|---|
| M1 | in/Input parameter | 24 |
| M2 | in/Input parameter | 128 |

CMD_SET_KEY_PAIRSLOT indicates that two memory slots are bound as a pair to support key update.

Input parameters: first parameter M1=key storage location (KEY_ID)|memory slot 1|memory slot 2|counter; second parameter M2=CMAC (key, M1). "|" may be understood as concatenation. For example, M1 may be a concatenation of bytes corresponding to KEY_ID, memory slot 1, memory slot 2, and counter. For example, in a process of transmitting M1, bytes such as KEY_ID, memory slot 1, memory slot 2, and counter may be sequentially transmitted.

"KEY_ID" indicates a memory slot of a key (key) to be used as a key used for computing M2, for example, KEY_ID may be MASTER_ECU_KEY of the target device.

"key" indicates a key corresponding to KEY_ID.

"counter": The counter value may be a larger value of the counter value in memory slot 1 and memory slot 2 plus 1 to prevent replay attacks.

Function descriptions of CMD SET_KEY PAIRSLOT: For example, CMD_SET_KEY PAIRSLOT instructs the SHE to set memory slot 1 and memory slot 2 as the key pair of each other. It may be understood that the value of "memory slot 1" is set to the pairslot location of the key in the "memory slot 2", and the value of "memory slot 2" is set to the pairslot location of the key in the "memory slot 1".

When setting the pairslot of a key, the SHE can automatically set the supportupdate value of the key to 1.

If the input value of "memory slot 1" or "memory slot 2" is 0, ERC_KEY_INVALID may be returned.

A storage location of a key in the second device may be different from a storage location of a key of each device in the first device. Especially, the hardware security mechanisms may be different. Therefore, when the second device builds an input parameter of the CMD_SET_KEY PAIRSLOT command, an address memory slot (or another representation manner of a storage address) of a key (key) (which may refer to MASTER_ECU_KEY in this embodiment of this application) used for computing M2 in the second device may be different from a storage location of each device in the first device. Therefore, when building an input parameter of the CMD_SET_KEY_PAIRSLOT command, the HSM or the SHE in the second device needs to provide enough parameter information such as storage locations of the MASTER_ECU_KEY in the target device and the second device.

That the KMS-server in the second device sets (1, 9) as a pair may indicate that the memory slot 1 and the memory slot 9 in the target device are paired.

It may be understood that each of the expressions such as "(1, 9)", "1|9", "1 and 9", and "1,9" may be understood as that the memory slot 1 and the memory slot 9 in the target device are paired.

Optionally, if the secure memory slot of the hardware is accessed in another manner in the hardware security mechanism of the target device, the hardware security mechanism of the second device and the hardware security mechanism of the target device need to support generation of the input parameter of the CMD_SET_KEY PAIRSLOT command by using a value in a corresponding manner. For example, if the memory slot uses a physical address, the location of the memory slot herein corresponds to the physical address of the memory slot.

Location of a protected key: 1, which may indicate that a storage location of a key used for computing M2 in the target device is the memory slot 1.

Local storage: X, which may indicate that a storage location of a key used for computing M2 in a secure environment of the second device (or understood as a cloud) is X. For example, the key may be stored in X in the second device, and when an input parameter is built, the key may be obtained from X.

It may be understood that a storage location in the second device is generally different from a storage location in the target device.

S303: The HSM/SHE in the second device builds first encryption information.

In this embodiment of this application, a process of building the first encryption information may be: building input parameters of CMD_SET_KEY_PAIRSLOT: M1=key storage location KEY_ID|1|9|counter; M2=CMAC (key, M1).

During building of M1, KEY_ID refers to a storage location of a key in the target device, or a storage location of a key in the cloud key management center. For example, when KEY_ID is 1, it may indicate that the storage location of the protected key in the target device is the memory slot 1. The KEY_ID may be selected according to a key update policy. For example, refer to the data in Table 3 provided in this embodiment of this application.

Optionally, M1 may further include another parameter, for example, a UID. In this case, M1=UID|KEY_ID|1|9.

During building of M2, the key of the target device from the local storage location X of the second device may be obtained when the MAC in M2 is computed by using the CMAC algorithm. The key needs to be the same as the key corresponding to KEY_ID in the target device.

A method for building the input parameters of the CMD_SET_KEY_PAIRSLOT command by the HSM/SHE in the second device may be as follows:

In an implementation, the method for building the input parameters of the CMD_SET_KEY PAIRSLOT command by the HSM/SHE in the second device may be: an authorized dedicated tool is used to connect to the second device to obtain a key of a corresponding vehicle, and then the input parameters are built.

In another implementation, the method for building the input parameters of the CMD_SET_KEY_PAIRSLOT command by the HSM/SHE in the second device may alternatively be: a KMS (for example, the KMS-server, the KMS-agent, or the KMS-client) of each device in the first device is used to build the input parameters. For example, the KMS of each device in the first device builds identity authentication information by using the second device, and sends the identity authentication information to the KMS of each device in the first device. The identity authentication information is used by the KMS of each device in the first device to perform identity authentication with the SHE or HSM of the current device. After the authentication succeeds, the KMS of each device obtains the SHE of the device or the SHE of another device, and sets a temporarily authorized key required by the pair.

S304: The HSM/SHE in the second device sends the first encryption information to a KMS-server in the second device.

Correspondingly, the KMS-server in the second device receives the first encryption information sent by the HSM/SHE in the second device.

S305: The KMS-server in the second device sends the first message including the first encryption information to each device (for example, the KMS-S/A/C) in the first device.

Correspondingly, the KMS-S/A/C in the first device receives the first encryption information sent by the KMS-server in the second device. The first message may include the first encryption information, and the first encryption information may be input parameters (M1, M2) of the CMD_SET_KEY_PAIRSLOT command.

S306: The KMS-S/A/C in the first device sends the first encryption information to the SHE in the first device.

Correspondingly, the SHE in the first device receives the first encryption information sent by the KMS-S/A/C in the first device.

S307: The SHE in the first device verifies the first encryption information.

For example, the SHE in the first device may use a key in a key storage location in M1 to compute a MAC value in M1, and compare the MAC value in M1 with that in M2 to verify integrity; and verify validity of the counter of the key. After the verification succeeds, the SHE in the first device pairs the memory slot 1 and the memory slot 9.

After receiving M1 and M2, the SHE (or the HSM or the like) in the first device may compute the MAC value in M1 by using a key (which may be MASTER_ECU_KEY in this embodiment of this application) corresponding to KEY_ID in M1, and compare the MAC value with that in M2. If the MAC in M1 is equal to that in M2, integrity verification succeeds, and subsequent verification is continued; or if the MAC in M1 is not equal to that in M2, the integrity verification fails, the current operation is prohibited, and a failure is returned.

The SHE in the first device verifies validity of the counter. For details, refer to a process in which the counter is verified when M1 is built. Details are not described herein again.

The SHE in the first device checks whether the memory slot 1 and the memory slot 9 in M1 can be paired:

If the memory slot 1 and the memory slot 9 are already paired, the current command operation may be prohibited, and a failure is returned, which indicates that the second memory slot is occupied.

If both the key in the memory slot 1 and the memory slot 9 are in use, the current command operation may be prohibited, and a failure is returned, which indicates that the second memory slot is occupied.

If only either the memory slot 1 or the memory slot 9 stores a key, the current command operation may be allowed.

If a key is available in neither 1 nor 9 (for example, the keys in 1 and 9 are blank), the current command operation may be allowed. In this case, KEY_ID should be set to another key.

If execution of the foregoing command is allowed, the SHE in the first device may set the pairslot in the memory slot 1 to 9, and set the pairslot in the memory slot 9 to 1. "supportupdate" in the two memory slots (for example, 1 and 9) is set to 1, indicating that the keys in the two memory slots can be updated.

After the integrity verification succeeds, the SHE in the first device may set the memory slot 1 and the memory slot 9 as a pair.

S308: The SHE in the first device sends a setting result feedback (success) to the KMS-S/A/C in the first device.

Correspondingly, the KMS-S/A/C in the first device receives the result feedback (success) sent by the SHE in the first device.

S309: The KMS-S/A/C in the first device feeds back the execution result (success) of CMD_SET_KEY PAIRSLOT to the cloud (for example, the KMS-server) by using a message.

Correspondingly, the KMS-server in the second device receives the execution result (success) of CMD_SET_KEY_PAIRSLOT that is sent by the KMS-S/A/C in the first device.

S310: The KMS-server in the second device updates a cloud vehicle database. For example, the first device updates a configuration result of the configuration file information of the corresponding KMS.

Based on this, the vehicle side or the cloud may extend the hardware security mechanism, so that the hardware security mechanism can support setting of the second memory slot for the first memory slot. The cloud device provides a memory slot for the key, so that a computation workload required for setting the second memory slot can be reduced, and a storage space can be optimized.

Method 2: The cloud device sets two memory slots to support key update. For example, FIG. 4A and FIG. 4B are another schematic flowchart of setting a second memory slot according to an embodiment of this application.

As shown in FIG. 4A and FIG. 4B, when building an input parameter for the CMD_SET_KEY PAIRSLOT, the HSM/SHE in the second device may also synchronously set a pair for a key corresponding to the HSM/SHE in the second device, so that in key update logic, the HSM/SHE may temporarily store the second key in Y, and move the second key to X after the update is completed.

For example, as shown in FIG. 4A and FIG. 4B, a process based on manner 2 may include the following steps:
S401: A user starts a KMS configuration change of a first device.
S402: The KMS-server in the second device requests to build first encryption information for an ECU 1.

In this embodiment of this application, the first encryption information may include: setting (1,9) as a pair; location of a protected key: 1; local storage location: X; and setting (X, Y) as a pair. The KMS-server in the second device sends the foregoing data to the HSM/SHE in the second device.

S403: HSM/SHE in the second device builds first encryption information.

In this embodiment of this application, a process of building the first encryption information may be: building the input parameters of CMD_SET_KEY PAIRSLOT: M1=KEY_ID|1|9|counter, and M2=CMAC (key, M1); and pairing X and Y in the second device.

When setting a pair of memory slots for X, the HSM/SHE in the second device may also refer to a historically set pair of memory slots. For example, the cloud may use a memory slot that is previously used to pair with X as the memory slot for pairing with X this time.

Optionally, when the HSM/SHE in the second device sets a pair of memory slots for X, after each device in the first device is successfully set, an internal hardware mechanism such as the HSM/SHE may automatically set a pair of memory slots for X. Alternatively, before the key is updated, a memory slot used for pairing with X is automatically set for X.

S404 to S410 are similar to steps S304 to S310, and details are not described herein again.

Based on this, the vehicle side or the cloud may extend the hardware security mechanism, so that the hardware security mechanism can support setting of the second memory slot for the first memory slot. The cloud device provides two memory slots for the key, to facilitate update and storage of the cloud key.

The foregoing has described the process of setting the second memory slot based on the pairing solution. Optionally, the setting of the slave memory slot may be canceled based on the pairing solution. For example, the following uses the pairing solution an example to describe how to unbind the slave memory slot.

In a possible implementation, the method further includes: the first device unbinds the second memory slot based on the hardware security mechanism.

For example, the second memory slot may be unbound based on the CMD_RESET_KEY_PAIRSLOT command in the SHE mechanism. For example, function descriptions of CMD_RESET_KEY_PAIRSLOT may be shown in Table 11.

**Table 11 Schematic table of the function descriptions of CMD_RESET_KEY_PAIRSLOT**

| Parameter | Direction | Width (bits) |
|---|---|---|
| M1 | in | 16 |
| M2 | in | 128 |

CMD_RESET_KEY_PAIRSLOT may instruct the SHE to unpair two specified memory slots. For example, the pairslot values of the two memory slots may be set to 0, and the SHE automatically sets the value of supportupdate of the key to 0, and sets the value of slave to 0.

Input parameters: M1=KEY_ID|memory slot|counter; M2=CMAC (key, M1).

"KEY_ID" indicates a key (key) to be used as a key used for computing M2, for example, the KEY_ID may be MASTER_ECU_KEY of the target device.

"key" indicates a key corresponding to KEY_ID.

"counter": The value can be the counter value of the updated key in the memory slot plus 1 to prevent replay attacks.

If the input memory slot value is 0, the current operation can be ignored, and ERC_KEY_INVALID is returned.

In this embodiment of this application, for a process of unpairing two memory slots that are paired, refer to the foregoing descriptions of the logical processing and the function descriptions of CMD_RESET_KEY_PAIRSLOT. Details are not described herein again.

Based on this, the vehicle side or the cloud may extend the hardware security mechanism, so that the hardware security mechanism can support setting of the second memory slot for the first memory slot. The unpairing function can simplify key update operations.

The foregoing has described the process of setting a memory slot and unbinding a memory slot based on a pairing solution. The following uses the pairing solution as an example to describe a key update process.

In a possible implementation, the method further includes: the first device updates the first key based on the hardware security mechanism. In this embodiment of this application, a process in which the first device updates the first key based on the hardware security mechanism may be as follows: The first device receives a second message from the second device; the first device obtains a second key according to the second encryption information; the first device stores the second key in the second memory slot; the first device builds third encryption information based on the second key and the second memory slot; and the first device sends the third encryption information to the second device.

The second message includes second encryption information used to indicate the first memory slot, the second memory slot, and the second key, and the third encryption information indicates the first device to complete storage of the second key.

The second encryption information includes a third parameter M3, a fourth parameter M4, and a fifth parameter M5, where M3 is related to information in the first memory slot and information in the second memory slot. M4 is related to the second key. M5 is related to M3, M4, and the first key. For example, the second encryption information may be CMD_LOAD_KEY (M1, M2, M3).

The third encryption information includes a sixth parameter M6 and a seventh parameter M7, where M6 is related to information in the second memory slot, and M7 is related to the second key. For example, the third encryption information may be CMD_LOAD_KEY (M4, M5).

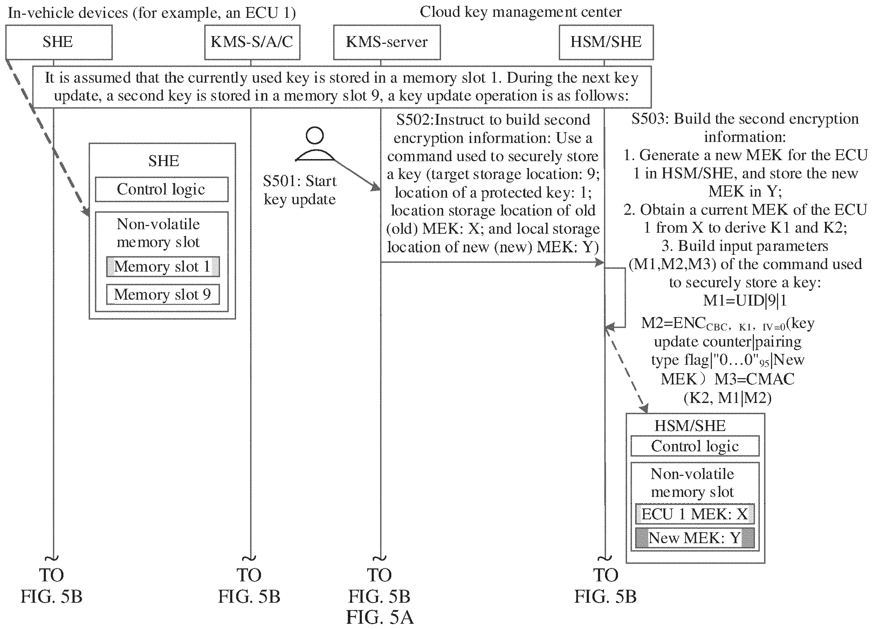

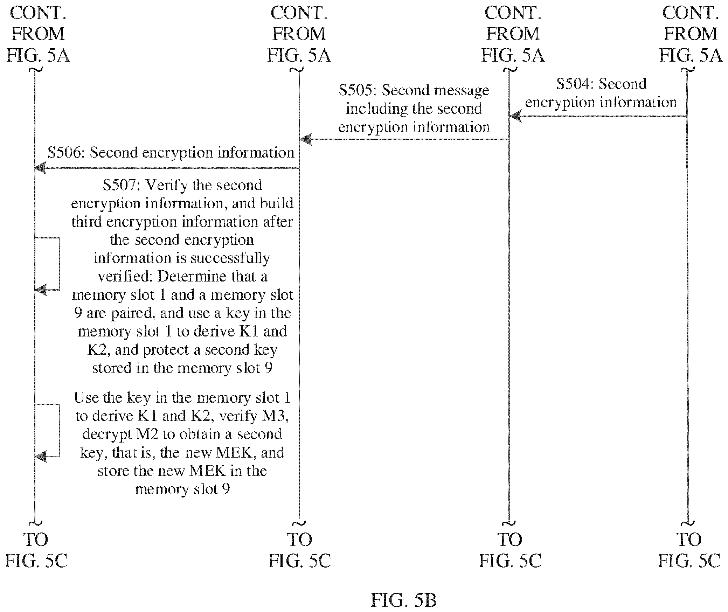

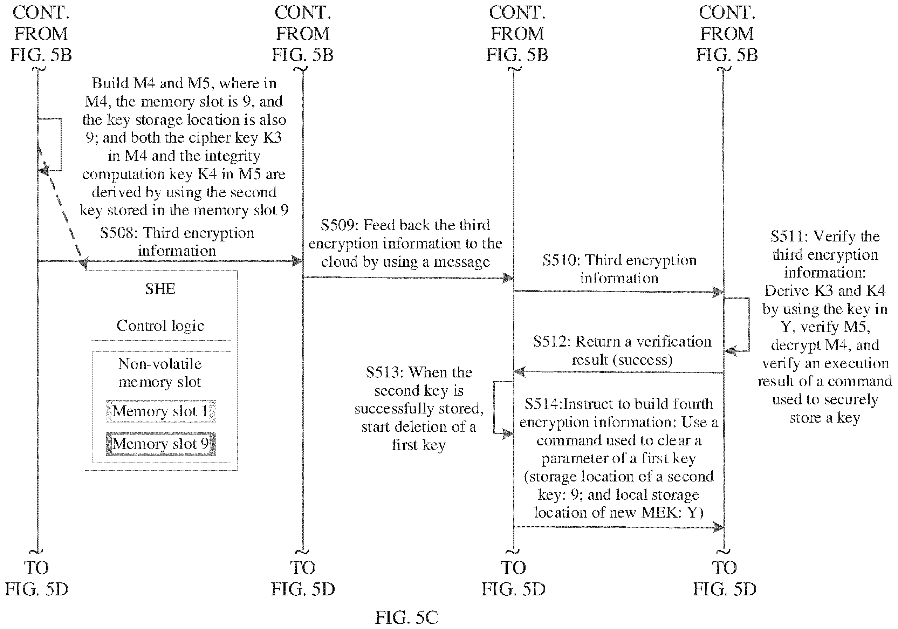

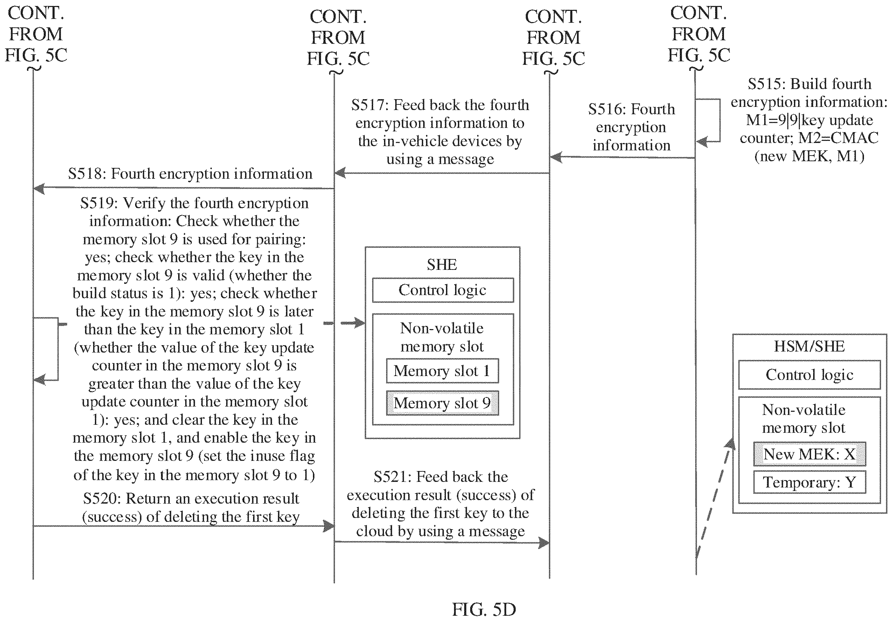

On the basis of implementing key update based on the pairing solution, the pairing solution may be further divided into two manners based on a quantity of memory slots provided by the cloud device to support key update, including manner A and manner B. Specifically, in manner A, the cloud device supports key update based on one memory slot; and in manner B, the cloud device supports key update based on two memory slots (as shown in the embodiment corresponding to FIG. 5A to FIG. 5D).

It may be understood that, in a solution in which manner A and manner B are combined, the processing procedure may be easily obtained, and details are not described herein again.

Manner B: The cloud device supports key update based on two memory slots. For example, FIG. 5A to FIG. 5D are a schematic flowchart of updating a key according to an embodiment of this application. As shown in FIG. 5A to FIG. 5D, the procedure may include a target device (for example, an ECU 1) in a vehicle and a cloud key management center.

Each in-vehicle device may include:
an in-vehicle SHE (or HSM), mainly configured to manage keys on the current device;
an in-vehicle KMS-S/A/C (including a KMS-server, a KMS-agent, or a KMS-client), that is a KMS logical functional module deployed in a vehicle, where in this embodiment of this application, the KMS-S/A/C may be configured to assist in managing an in-vehicle key update function, and is responsible for performing a key update function by using the SHE of the current device, the KMS-S/A/C may be integrated in each in-vehicle device, and the deployed KMS logical function may be an in-vehicle KMS server, an in-vehicle KMS agent, or an in-vehicle KMS client;
an in-vehicle KMS server, that exchanges messages with the KMS server in the cloud key management center, where in this solution, the in-vehicle KMS server is configured to assist in managing functions such as pair configuration and key update on the device and other in-vehicle devices;
an in-vehicle KMS-agent: for some devices that cannot directly communicate with the cloud by using a message, an agent may be required for forwarding and management, for example, the devices that need forwarding and management may include an ECU on a CAN or CANFD bus, and the ECU needs to be managed by using a gateway, a VDC, an MDC, a CDC, or another device; and
an in-vehicle KMS-client, that may manage another device other than the KMS-agent and the KMS-server.

The cloud key management center may include:
a cloud KMS-server, configured to set a pair for different vehicles or SHEs, HSMs, or the like in different devices, generate related command input parameters, and transfer the command input parameters to an SHE, an HSM, or the like of each in-vehicle device; and
a cloud HSM/SHE, that provides a secure hardware environment for the cloud key management center, and generates an input parameter of a command like CMD_LOAD_KEY.

As shown in FIG. 5A to FIG. 5D, it is assumed that MASTER_ECU_KEY of a target device (or referred to as an ECU 1) needs to be updated, a currently used key is stored in the memory slot 1, and memory slots 1 and 9 are paired in advance. Therefore, a detailed processing procedure of updating the MASTER_ECU_KEY key may include the following steps.

S501: Start key update.

For example, the user may start key update, or the key update is automatically started after the first device configures the second memory slot for the first memory slot.

S502: The KMS-server in the second device instructs to build second encryption information.

In this embodiment of this application, parameters used to build the second encryption information may include: target storage location: 9; location of a protected key: 1; location storage location of old (old) MEK: X; and local storage location of new (new) MEK: Y The KMS-server sends the foregoing data to the HSM/SHE in the second device.

S503: The HSM/SHE in the second device builds the second encryption information.

In this embodiment of this application, a process of building the second encryption information may include: the HSM/SHE in the second device generates the new MEK for the ECU 1, and stores the new MEK into Y; obtains the current MEK of the ECU 1 from X, and derives K1 and K2; and builds input parameters (M1, M2, M3) of CMD_LOAD_KEY

M1=UID|9|1; M2=ENCCBC, K1, IV=0 (counterlpairing type flag (flags)|"0... 0"95|new MEK); M3=CMAC (K2, M1|M2).

For example, function descriptions of CMD_LOAD_KEY may be shown in Table 12.

**Table 12 Schematic table of the function descriptions of CMD_LOAD_KEY**

| Parameter | Direction | Width (bits) |
|---|---|---|
| M1 | in/Input parameter | 128 |
| M2 | in/Input parameter | 256 |
| M3 | in/Input parameter | 128 |
| M4 | out/Output parameter | 256 |
| M5 | out /Output parameter | 128 |

CMD_LOAD_KEY can be used to securely store the key to a memory slot specified by the memory slot in the SHE.

Input parameters:
M1=UID|memory slot|KEY_ID;
M2=ENCCBC, K1, IV=0 (counter|flags|"0...0"95|KeyMemory slot);
M3=CMAC (K2, M1|M2).

Output parameters:
M4=UID|memory slot|KEY_ID|EncyptedValue;
M5=CMAC (K4, M4).

An output parameter may be understood as a parameter that is output. The output parameter may be used to transfer an input parameter to a command.

"UID" may be a UID corresponding to the ECU, or may be a wildcard UID.

"memory slot" specifies the memory slot in which the key is stored by the command.

"KEY_ID" specifies the key used to derive K1 and K2.

ENCCBC, K1, IV=0: indicates that the Advanced Encryption Standard (advanced encryption standard, AES) cipher block chaining (cipher block chaining, CBC) mode is used for encryption. A value of IV may be 0, and K1 is used as a cipher key.

"KeyMemory slot" indicates the second key to be stored in the memory slot.

EncyptedValue=ENCCBC, K3, IV=0 (counter|"1"₁|"0... 0"₉₉), where

"K3": a cipher key derived from the second key (that is, Key Memory slot) stored in the memory slot.

"counter": The value is the same as the counter value in the input parameter. The value is 28 bits.

"1"₁: indicates "1" in "1 bit".

"0...0"₉₉: indicates that 99 bits are padded with 0s. For example, if AES_CBC_128 is used for encryption, a block length is 128 bits.

K3 and K4 are respectively a cipher key and an integrity computation key that are derived from the second key (that is, the KeyMemory slot) stored in the memory slot.

For example, when an input parameter of the CMD_LOAD_KEY command is constructed, the HSM/SHE in the second device needs to provide sufficient parameter information for a case in which storage locations of the target device and the cloud key may be different. As shown in FIG. 5A to FIG. 5D, when the input parameters of the CMD_LOAD_KEY command are built:

Target storage location: 9, which indicates the second key of MASTER_ECU_KEY is to be stored in the memory slot 9 in the SHE of the ECU 1.

Location of a protected key: 1, which indicates the storage location of the key used for computing M2 and M3 in the SHE of the ECU 1 is the memory slot 1, that is, the key is MASTER_ECU_KEY This is also a storage location of the first key (which may be understood as a currently used key) during current key update in the SHE of the ECU 1.

During computation of M2 and M3, the cipher key K1 and the integrity key K2 are derived from the current key of MASTER_ECU_KEY

Location storage location of old MEK: X, where MEK refers to MASTER_ECU_KEY, and X indicates a storage location of the first key in the HSM/SHE in the cloud security environment. X is used to notify the cloud security environment that the cipher key K1 and the integrity computation key K2 that are used for computing M2 and M3 need to be derived by using a key stored in X in the HSM/SHE in the cloud security environment. The key stored in X needs to be the same as that stored in the memory slot 1 of the ECU 1.

Local storage location of new MEK: Y, where MEK refers to MASTER_ECU_KEY, which indicates a temporary storage location of the new key of MASTER_ECU_KEY in the HSM/SHE in the cloud security environment when the key is updated (after the update is completed, the cloud may store the second key in X to facilitate key management in the cloud; certainly, the second key may be stored in Y all the time, and in this case, cloud management is more complex).

A manner in which the cloud generates the second key for the ECU 1 may be as follows:

In an implementation, the cloud may generate a random number rand as the second key new MEK by using a random number function provided in the HSM/SHE, and store the random number rand in Y

In another implementation, the second key may alternatively be derived iteratively once based on the generated random number by using the first key, for example, new MEK=CMAK (old MEK, rand).

In still another implementation, the second key may alternatively be obtained by the KMS-server in the second device from another place (for example, generated by a third-party device), and sent to the HSM/SHE or the like together with a request for building an input parameter of the CMD_LOAD_KEY command.

Further, an input parameter of the second encryption information may be built based on a function of the CMD_LOAD_KEY and a parameter such as the second key. A process of building the input parameter may include:
M1=UID|9|1.

The UID may be a UID of the ECU 1. If MASTER_ECU_KEYs of all devices in the first device are the same, the UID herein may also be a wildcard UID.

"9" indicates the memory slot 9 of the ECU 1, and "1" indicates the memory slot 1 of the ECU 1.

M2=ENCCBC, K1, IV=0 (counter|flags|"0...0"95|New MEK); M3=CMAC (K2, M1|M2).

The cipher key K1 and the integrity computation key K2 are derived from the current key of MASTER_ECU_KEY

S504: The HSM/SHE in the second device sends the second encryption information to the KMS-server in the second device.

Correspondingly, the KMS-server in the second device receives the second encryption information sent by the HSM/SHE in the second device.

S505: The KMS-server in the second device sends the second message including the second encryption information to each device (for example, a KMS-S/A/C) in the first device.

The second message includes second encryption information used to indicate the first memory slot, the second memory slot, and the second key.

Correspondingly, the KMS-S/A/C in the first device receives the second encryption information sent by the KMS-server in the second device.

S506: The KMS-S/A/C in the first device sends the second encryption information to the SHE in the first device, and performs key update.

Correspondingly, the SHE in the first device receives the second encryption information sent by the KMS-S/A/C in the first device.

S507: The SHE in the first device verifies the second encryption information, and may build third encryption information after the second encryption information is successfully verified.

In this embodiment of this application, after the second encryption information is successfully verified, the second key may be set to be stored in the memory slot 9.

A process in which the SHE in the first device verifies the second encryption information may be as follows:

The SHE in the first device checks whether the memory slot 1 and the memory slot 9 that are indicated in M1 are paired. The SHE in the first device determines whether a value in the pairslot of the memory slot 1 is the memory slot 9 and whether a value in the pairslot of the memory slot 9 is the memory slot 1, or determines whether a value in the pairslot of the memory slot 1 is the memory slot 9 and whether a value in the pairslot of the memory slot 9 is the memory slot 1 and whether "supportupdate" in the memory slot 1 and the memory slot 9 is 1, to determine whether the memory slot 1 and the memory slot 9 are paired.

If the memory slot 1 and the memory slot 9 are not paired, common key loading may be performed; or if the memory slot 1 and the memory slot 9 are paired, and the following processing may be performed by following a key update processing procedure.

Further, the SHE in the first device may check whether the key in 1 is valid. The SHE in the first device checks validity of the key based on the buildstatus flag of the key. For example, when the value of buildstatus is 0, the current command operation may be prohibited; or when the value of buildstatus is 1, it may indicate that the key in 1 is valid, and the following processing may be continued.

Further, the SHE in the first device may derive K2 by using the key in 1, compute M3'=CMAC (K2, M1|M2), and compare M3' with M3 in CMD_LOAD_KEY. If M3 is not equal to M3', a failure may be returned, and the current operation of the CMD_LOAD_KEY command is prohibited; or if M3 is equal to M3', it indicates that the integrity verification succeeds, and the following processing may be continued.

Further, K1 is derived by using the key in the memory slot 1, and M2 is decrypted, to obtain values of the counter, the flags, and the new MKE.

The SHE in the first device may compare whether the obtained counter value is greater than the counter value in the memory slot 1. If the obtained counter value is not greater than the counter value in the memory slot 1, the SHE may prohibit this operation; or if the obtained counter value is greater than the counter value in the memory slot 1, the SHE may continue to perform the following processing.

Further, the SHE in the first device may store the counter, the flags, and the new MKE in the memory slot 9, set the buildstatus value of "memory slot 9" to 1, and set inuse to 0.

After the second encryption information is successfully verified, the SHE in the first device builds the third encryption information. The third encryption information indicates the first device to complete storage of the second key. The third encryption information includes a sixth parameter M6 and a seventh parameter M7, where the sixth parameter M6 may be understood as M4 described below, and the seventh parameter M7 may be understood as M5 described below. Details are not described below again.

In this embodiment of this application, a process of building the third encryption information may include: building output parameters M4 and M5 of CMD_LOAD_KEY. M4=UID|9|9|EncyptedValue; M5=CMAC (K4, M4).

EncyptedValue=ENCCBC, K3, IV=0 (counter|"1"₁|"0... 0"₉₉)

"K3": a cipher key derived from the second key (that is, the new MKE) stored in the memory slot 9.

"counter": The value is the same as the counter value in the input parameter. The value is 28 bits.

"1"₁: indicates "1" in "1 bit".

"0...0"₉₉: indicates that 99 bits are padded with 0s. For example, if AES_CBC_128 is used for encryption, a block length is 128 bits.

K3 and K4 are respectively a cipher key and an integrity computation key that are derived from the second key (that is, the new MKE) stored in the memory slot 9.

S508: The SHE in the first device sends the third encryption information to the KMS-S/A/C in the first device.

Correspondingly, the KMS-S/A/C in the first device receives the third encryption information sent by the SHE in the first device.

S509: The KMS-S/A/C in the first device feeds back the third encryption information to the second device (for example, the KMS-server) by using a message.

Correspondingly, the KMS-server in the second device receives the third encryption information sent by the KMS-S/A/C in the first device.

S510: The KMS-server in the second device sends the third encryption information to the HSM/SHE in the second device.

Correspondingly, the HSM/SHE in the second device receives the third encryption information of the ECU 1 that is sent by the KMS-server in the second device.

The local key is stored in Y of the second device.

S511: The HSM/SHE in the second device verifies the third encryption information.

A process in which the HSM/SHE in the second device verifies the third encryption information may include: the HSM/SHE in the second device derives K3 and K4 by using the key in Y, verifies M5, decrypts M4, and then verifies the third encryption information. A process of verifying the third encryption information is similar to the foregoing process of verifying the first encryption information and the second encryption information, and details are not described herein again.

After the third encryption information is successfully verified, the HSM/SHE in the second device determines that the second key in the first device is successfully installed.

S512: The HSM/SHE in the second device returns a verification result (success) to the KMS-server in the second device.

Correspondingly, the KMS-server in the second device receives the verification result (success) sent by the HSM/SHE of the second device.

The foregoing has described the process of updating a key based on the pairing solution. Optionally, the first device may delete the first key based on the pairing solution. For example, the following uses the pairing solution as an example to describe a process in which the first device deletes the first key.

In a possible implementation, after the sending, after the first device sends the third encryption information to the second device, the procedure further includes: the first device receives fourth encryption information from the second device, where the fourth encryption information indicates the first device to delete the first key; the first device verifies the fourth encryption information; and when the fourth encryption information is successfully verified, the first device deletes the first key; or when the fourth encryption information is successfully verified, the first device deletes the first key, transfers the second key from the second memory slot to the first memory slot, and cancels the association relationship between the second memory slot and the first memory slot.

In this embodiment of this application, the fourth encryption information includes an eighth parameter M8 and a ninth parameter M9, where M8 is related to information in the second memory slot, and M9 is related to M8 and the second key. For example, the fourth encryption information may include CMD_RESET_PAIR_KEYINFO (M1, M2).

S513: The KMS-server in the second device determines that the second key is successfully stored, and starts deletion of the first key.

S514: The KMS-server in the second device instructs the HSM/SHE in the second device to build fourth encryption information.

In this embodiment of this application, the fourth encryption information is used to indicate the first device to delete the first key. The fourth encryption information includes an eighth parameter M8 and a ninth parameter M9, where the eighth parameter M8 may be understood as M1 described below, and the ninth parameter M9 may be understood as M2 described below. Details are not described below again.

Parameters used to build the fourth encryption information may include: when CMD_RESET_PAIR_KEYINFO is built, a storage location of a second key is 9, and a temporary local storage location of the new MEK is Y

S515: The HSM/SHE in the second device builds the fourth encryption information.

In this embodiment of this application, a process of building the fourth encryption information may include: building input parameters of CMD_RESET_PAIR_KEYINFO: M1=9|9|counter; M2=CMAC (new MEK, M1).

For example, function descriptions of CMD_RESET_PAIR_KEYINFO may be shown in Table 13.

**Table 13 Schematic table of the function descriptions of CMD_RESET_PAIR_KEYINFO**

| Parameter | Direction | Width (bits) |
|---|---|---|
| M1 | in | 16 |
| M2 | in | 128 |

CMD_RESET_PAIR_KEYINFO: indicates that the SHE is instructed to clear the key information in the key pair in the memory slot, but the pairing relationship is not canceled. For example, if the memory slot includes a key pair and the value of pairslot is "memory slot 1", the key information in the memory slot 1 is cleared, the value of buildstatus is set to 0-Not built, the value of inuse is set to 0, and the value of Key ID is set to 0. In addition, the inuse flag in the memory slot is set to 1, indicating that the memory slot can be enabled immediately.

Input parameters:
M1=KEY_ID|memory slot|counter; M2=CMAC (key, M1).

"memory slot": clears the key information in the memory slot corresponding to the pairslot in the storage block.

"KEY_ID" indicates a key (key) to be used as a key used for computing M2, for example, the KEY_ID may be MASTER_ECU_KEY of the target device.

"key" indicates a key corresponding to KEY_ID.

"counter" indicates the counter value in the memory slot that is used to prevent replay attacks.

It may be understood that when the buildstatus value of the key in the memory slot is 1, it indicates that the building is successful; and when the counter value is equal to the value of CKMS_KH_BuildCounter, execution of the command may be allowed. When the buildstatus value of the key in the memory slot is not 1, and the counter value is different from the value of CKMS_KH_BuildCounter, this command is ignored. If the value of buildstatus is 0, it indicates that building is not performed, and ERC_KEY_NOT_BUILD may be returned. If the value of counter is not equal to the value of CKMS_KH_BuildCounter, ERC_KEY_IS_OLD may be returned.

If the memory slot is not used for pairing, the inuse flag in the memory slot may be set to 1, indicating that the memory slot can be enabled.

If the input memory slot value is 0, the current operation can be ignored, and ERC_KEY_INVALID is returned.

M1=9|9|counter, which indicates that the first key stored in the pair (1) in the memory slot 9 needs to be cleared. If M1=9|1|counter, it indicates that the first key stored in the memory slot 1 needs to be cleared.

Optionally, M1 may further include a UID, that is, M1=UID|9|9|counter, which indicates which device in the first device can perform the command operation. If the UID is a wildcard UID, it indicates that all devices can perform the command operation.

S516: The HSM/SHE in the second device sends the fourth encryption information to the KMS-server in the second device.

Correspondingly, the KMS-server in the second device may receive the fourth encryption information sent by the HSM/SHE in the second device.

S517: The KMS-server in the second device sends the fourth encryption information to each device (for example, a KMS-S/A/C) in the first device by using a message.

Correspondingly, the KMS-S/A/C in the first device receives the fourth encryption information sent by the KMS-server in the second device.

S518: The KMS-S/A/C in the first device sends the fourth encryption information to the SHE in the first device.

Correspondingly, the SHE in the first device receives the fourth encryption information sent by the KMS-S/A/C in the first device.

S519: The SHE in the first device verifies the fourth encryption information.

In this embodiment of this application, after the fourth encryption information is successfully verified, the SHE in the first device may delete the first key.

A process in which the SHE in the first device performs verification based on the fourth encryption information may include:

The SHE in the first device checks whether the memory slot 9 and another memory slot are paired. If the memory slot 9 and the another memory slot are not paired, the current operation may be prohibited; or if the memory slot 9 and the another memory slot are paired, the following processing may be continued.

The SHE in the first device checks whether the key in the memory slot 9 is valid. The SHE in the first device may determine validity of the key based on whether the buildstatus flag of the key is 1. For example, when the value of buildstatus is 0, the current operation may be prohibited; or when the value of buildstatus is 1, it may indicate that the key in the memory slot 9 is valid, and the following processing may be continued.

The SHE in the first device checks whether the key in the memory slot 9 is newer than that in the memory slot 1 (counter_9>counter_1). If counter_9 is greater than counter_1, the key in the memory slot 1 is cleared; the value of inuse in the memory slot 9 is set to 1, indicating that the key is enabled; and a success message is returned to the cloud key management center by using a message. If counter_9 is less than or equal to counter_1, the current command operation may be prohibited.

The SHE in the first device clears the key in the memory slot 1, enables the key in the memory slot 9, and may set inuse of the key in the memory slot 9 to 1.

S520: The SHE in the first device sends an execution result (success) of deleting the first key to the KMS-S/A/C in the first device.

Correspondingly, the KMS-S/A/C in the first device receives the execution result (success) of deleting the first key sent by the SHE in the first device.

S521: The KMS-S/A/C in the first device feeds back the execution result (success) of deleting the first key to the cloud (for example, the KMS-server) by using a message.

Correspondingly, the KMS-server in the second device receives the execution result (success) of deleting the first key sent by the KMS-S/A/C in the first device.

After receiving the feedback message indicating that the first key is successfully deleted, the cloud may instruct the HSM/SHE in the second device to move the second key of the ECU 1 that is stored in Y to X. The memory slot in Y is cleared for updating other keys or other purposes. It may be understood that this manner may be a slave solution for the HSM/SHE in the second device.

Optionally, the HSM/SHE in the second device may also use the pairing solution. After the second key is updated this time, the second key is stored in Y. In this way, the KMS-server in the second device also needs to update the storage location of the second key of the vehicle.

For example, in addition to moving the second key of the ECU 1 stored in Y to the key in X and clearing the memory slot in Y, the first key may also be deleted by using the following method.

Optionally, a key deletion function command may be separately provided.

Optionally, input parameters of a command such as CMD_LOAD_KEY may also be built by another device. For example, a transfer tool or a KMS-server in the second device is used to transfer the input parameters of the command to each device in the first device.

Optionally, the second key, that is, new MEK, may be moved from the memory slot 9 to the memory slot 1 by adding another function command CMD_MOVE_KEY. It may be understood that this solution is equivalent to the slave manner, and a difference lies in that no isslave flag is set.

In this mechanism, a same common second memory slot may be used in serial for key update in different memory slots. For example, a memory slot at the memory slot 9 is set as a second memory slot for the memory slot 1. After the key update operation for the memory slot 1 is implemented by using the memory slot 1 and the memory slot 9, the memory slot 1 and the memory slot 9 may be unpaired, and a memory slot at the location of the memory slot 9 may be subsequently used as a second memory slot for another memory slot.

Optionally, in the pairing solution, the first key and the second key may coexist for a long time (which may be understood as that a pair of memory slots are fixedly set for a purpose). For example, to ensure reliability and prevent a key in one memory slot from being corrupted (for example, a key is unreadable, a flash (flash) memory slot includes a corrupted area, or changed content), another key may be used. This is valuable in specific service scenarios with high security requirements. The solution may be as follows:

For example, the MASTER_ECU_KEY, the memory slot 1, and the memory slot 9 are used as an example. Key update may be started when validity of the key stored in the memory slot 1 reaches half of a lifetime (lifetime). Based on the foregoing logic, after the second key is successfully installed in the memory slot 9 by using CMD_LOAD_KEY, the first key is temporarily not deleted. The first key stored in the memory slot 1 may be preferentially used in an in-vehicle service (it may be understood that inuse in the memory slot 1 is 1, and inuse in the memory slot 9 is 0, but buildstatus of the memory slot 1 and buildstatus of the memory slot 9 are 1, indicating that both keys are valid).

In this case, the key in the memory slot 9 can also be used.

When the memory slot is corrupted, for example, the key in memory slot 1 fails to be read, the key in memory slot 9 can still be used. Therefore, the reliability is better and the function security of a higher level can be supported.

When the lifetime of the first key in the memory slot 1 expires, and validity of the second key in the memory slot 9 reaches 1/2 of the lifetime, update may be started again, and a latest key is stored in the memory slot 1. The key in the memory slot 9 can be used in the service.

Based on this, the hardware security mechanism may be extended, so that the hardware security mechanism can support key update. In this way, key update operations can be simplified, and efficiency of key update can be improved. In addition, in the pairing solution, because two memory slots that are paired are equivalent, the two memory slots can be alternately used in a service, thereby improving service reliability.

For example, when the first device is a cloud device, and the second device is an in-vehicle device, a key processing method according to an embodiment of this application may include the following content.

In a possible implementation, the method further includes: the first device receives the command used to instruct to pair the first memory slot and the second memory slot; the first device generates first encryption information based on the hardware security mechanism according to the command used to instruct to pair the first memory slot and the second memory slot, where the first encryption information indicates the first memory slot and the second memory slot; and the first device sends a first message to the second device, where the first message includes the first encryption information.

In a possible implementation, the method further includes: the first device receives the command used to instruct to update a key; the first device generates second encryption information based on the hardware security mechanism according to the command used to instruct to update a key, where the second encryption information indicates the first memory slot, the second memory slot, and the second key; the first device sends a second message to the second device, where the second message includes the second encryption information; the first device receives third encryption information from the second device, where the third encryption information indicates the first device to complete storage of the second key; the first device verifies the third encryption information; and when the third encryption information is successfully verified, the first device determines that the second key is successfully updated.

In a possible implementation, the method further includes: the first device sends fourth encryption information to the second device, where the fourth encryption information indicates the first device to delete the first key.

It may be understood that, for a specific implementation of the key processing method when the first device is a cloud device, reference may be made to the key processing method when the first device is an in-vehicle device. Details are not described herein again.

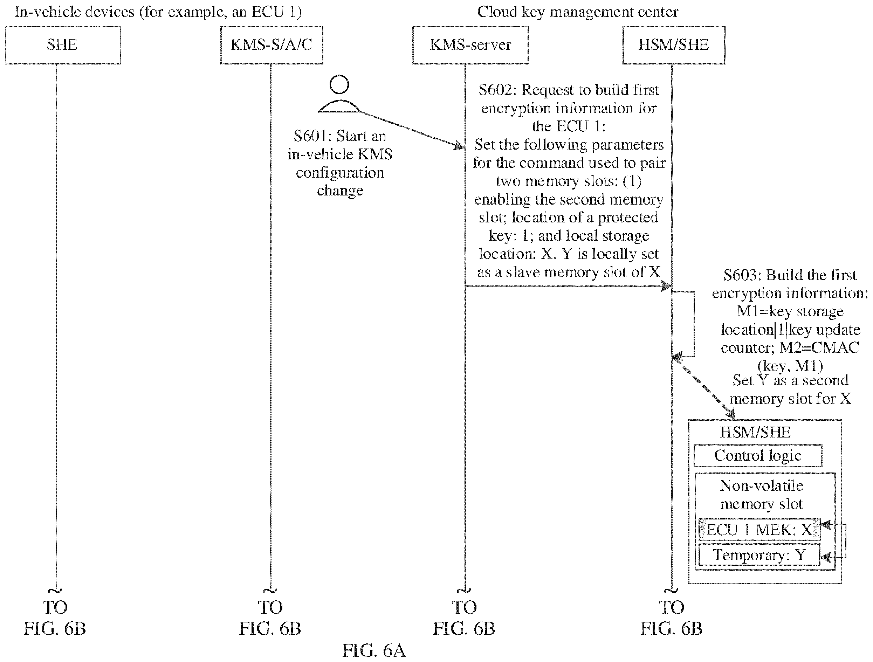

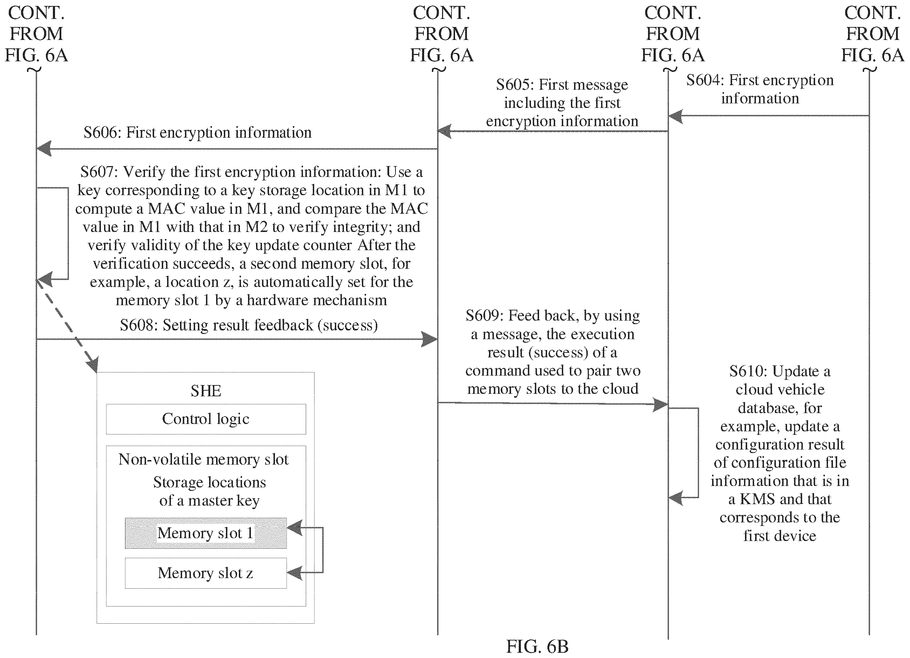

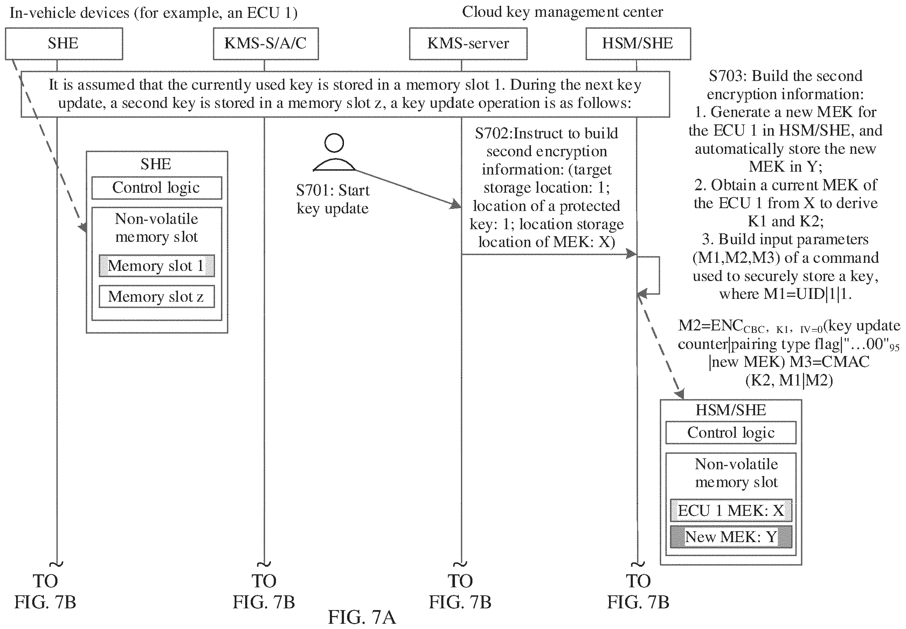

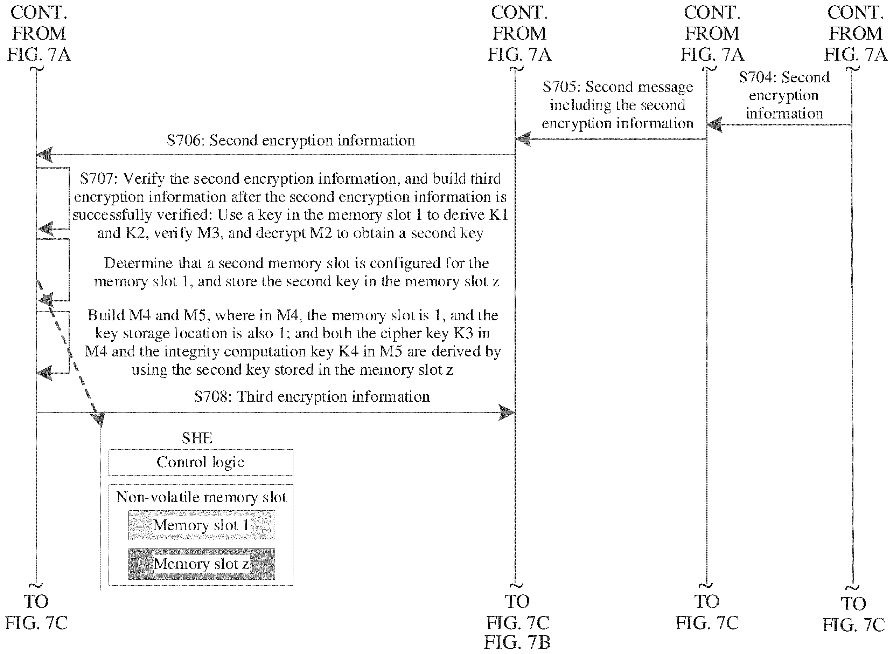

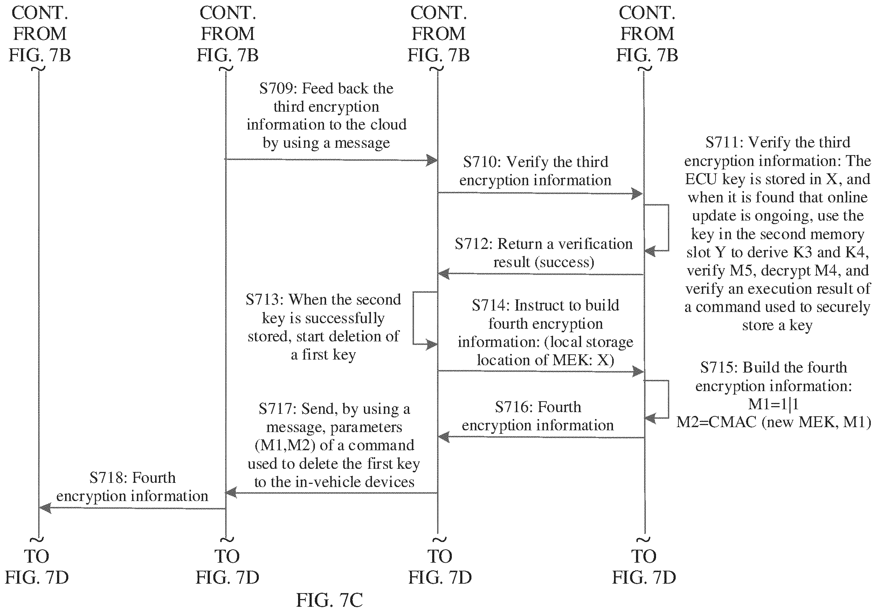

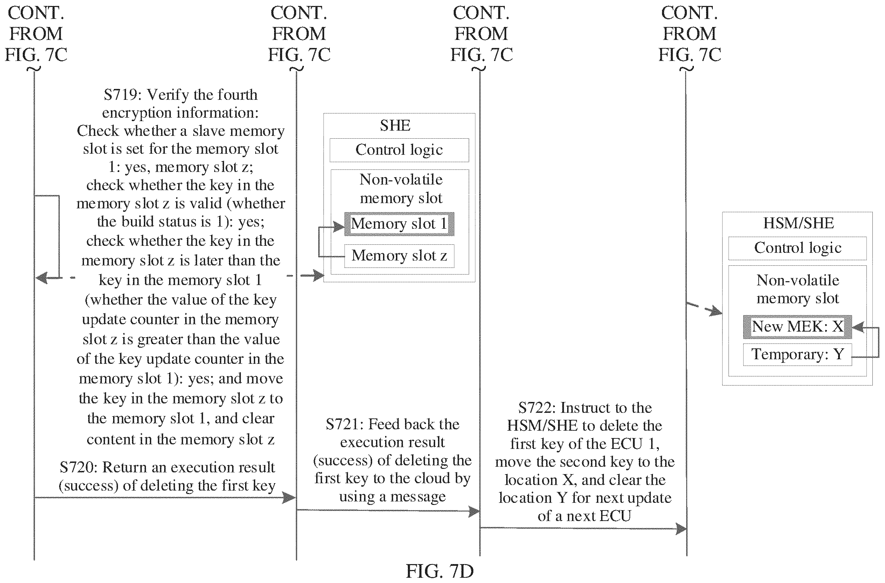

The foregoing has described the process of updating a key based on the pairing solution. For example, a slave solution is used as an example to describe setting of a slave memory slot (the embodiment corresponding to FIG. 6A and FIG. 6B) and key update (the embodiment corresponding to FIG. 7A to FIG. 7D). Combinations corresponding to the slave solution are shown in Table 14.

**Table 14 Combinations corresponding to the slave solution**

| No. | Time for setting the slave memory slot | Who specifies the slave memory slot? | Slave memory slots of different keys | Can the slave memory slot be sensed by a user? | If the slave memory slot needs to be sensed in a service, can it be implemented ? | Solution | Who decides whether to enable the slave memory slot? | Concurrency: Is concurrent update of a plurality of different keys supported? |
|---|---|---|---|---|---|---|---|---|
| 1 | Temporary setting | User-specified | Same | Restricted | No | Slave solution | User | Concurrency is not supported, but serial mode is supported. |
| 2 | | | Different | Yes | | | | Supported |
| 3 | | Hardware mechanism | Same | Restricted | | | | Concurrency is not supported, but serial mode is supported. |
| 4 | | | Different | Yes | | | | Supported |
| 5 | Fixed setting | User-specified | Same | Restricted | | Slave solution | | Concurrency is not supported, but serial mode is supported. |
| 6 | | Hardware mechanism | Same | Restricted | No | Slave solution | User or hardware mechanism | Concurrency is not supported, but serial mode is supported. |

The location of the slave memory slot may be automatically specified by the hardware mechanism, and the user may determine whether to enable the slave solution when a key is updated. The slave memory slot supports fixed setting or temporary setting. In the temporary setting mode, the memory slots for different keys may be the same or different.

If a slave memory slot is specified by a user, refer to related logic in the foregoing pairing solution. Details are not described herein again.

When a security chip with the fixed setting mode is produced, if the fixed setting mode is defined by using the hardware logic in the hardware security mechanism, or the fixed setting mode is defined by using firmware logic in the hardware security mechanism, but the fixed setting can be upgraded with a software package, an interface for a user setting function does not need to be provided, but an interface for using a key in a slave memory slot needs to be provided. A processing procedure may be obtained with reference to the following solution, and details are not described herein again.

For example, a method for setting a slave memory slot for a first memory slot is described by using an example in which a slave memory slot (for example, No. 3 in Table 14) is specified by the hardware mechanism based on a temporary setting in the slave solution. It may be understood that the slave solution below may be based on a manner in which a slave memory slot is specified by the hardware mechanism, and details are not described below.

An example in which the first memory slot is MASTER_ECU_KEY is used to describe that in the slave solution, before a key is updated, a slave memory slot is automatically set for MASTER_ECU_KEY by using a hardware mechanism by using the CMD_SET_KEY_SLAVESLOT command. For example, an internal memory slot z (which is invisible to a user) of the SHE is set as a slave memory slot of MASTER_ECU_KEY, as shown in Table 15.

**Table 15 Schematic table of using the memory slot z as a slave memory slot and supporting update of MASTER_ECU_KEY**

| content | memory slot | pairslot | isslave | Description |
|---|---|---|---|---|
| MASTER_ECU_KEY | 1 | Z | 0 | The memory slot reserved by the hardware mechanism is the slave memory slot for the memory slot 1, and is used to support update of the key of MASTER_ECU_KEY. |
| BOOT_MAC_KEY | 2 | | | |
| BOOT_MAC | 3 | | | |
| KEY_1 | 4 | | | |
| KEY_2 | 5 | | | |
| KEY_3 | 6 | | | |
| KEY_4 | 7 | | | |
| KEY_5 | 8 | | | |
| KEY_6 | 9 | | | |
| KEY_7 | 10 | | | |
| KEY_8 | 11 | | | |
| KEY_9 | 12 | | | |
| KEY_10 | 13 | | | |
| | | | | |
| Memory slot reserved by the hardware mechanism | Z | 1 | 1 | Serves as the slave memory slot of MASTER_ECU_KEY to support update of MASTER_ECU_KEY. |

A memory slot that is reserved by the hardware mechanism and that corresponds to the memory slot z may be understood as a second memory slot. For ease of understanding, the slave memory slot is referred to as the second memory slot below.

For example, FIG. 6A and FIG. 6B are another schematic flowchart of setting a second memory slot according to an embodiment of this application. As shown in FIG. 6A and FIG. 6B, the procedure may include a target device (for example, an ECU 1) in a vehicle and a cloud key management center.

Functions of the target device (for example, the ECU 1) in the vehicle and the cloud key management center are similar to the functions of the devices used when the second memory slot are set in the pairing solution, and details are not described herein again.

As shown in FIG. 6A and FIG. 6B, a process of setting the second memory slot based on the slave solution may include the following steps.

S601: A user starts a KMS configuration change of a first device.

S602: The KMS-server in the second device requests to build first encryption information for an ECU 1.

In this embodiment of this application, the first encryption information may include the following parameters: (1) enabling the second memory slot; location of a protected key: 1; local storage location: X; and locally setting Y as a slave memory slot of X. The KMS-server in the second device sends the foregoing data to the HSM/SHE in the second device.

S603: The HSM/SHE in the second device builds first encryption information.

In this embodiment of this application, parameters used to build the first encryption information may include: M1=KEY_ID|1|counter; M2=CMAC (key, M1). The HSM/SHE in the second device may set Y as a slave memory slot of X. A process of building the first encryption information is similar to the process of building the first encryption information in the pairing solution, and details are not described herein again.

S604: The HSM/SHE in the second device sends the first encryption information to a KMS-server in the second device.

Correspondingly, the KMS-server in the second device receives the first encryption information sent by the HSM/SHE in the second device.

S605: The KMS-server in the second device sends the first message including the first encryption information to each device (for example, the KMS-S/A/C) in the first device.

Correspondingly, the KMS-S/A/C in the first device receives the first encryption information sent by the KMS-server in the second device.

S606: The KMS-S/A/C in the first device sends the first encryption information to the SHE in the first device.

Correspondingly, the SHE in the first device receives the first encryption information sent by the KMS-S/A/C in the first device.

S607: The SHE in the first device verifies the first encryption information.

For example, the SHE in the first device may use a key corresponding to a key storage location in M1 to compute a MAC value in M1, and compare the MAC value in M1 with that in M2 to verify integrity; and verify validity of the counter of the key. After the verification succeeds, a second memory slot, that is, the memory slot z, is set for the memory slot 1.

It may be understood that the foregoing verification process is similar to the verification process in the pairing solution, and details are not described herein again.

S608: The SHE in the first device sends a setting result feedback (success) to the KMS-S/A/C in the first device.

Correspondingly, the KMS-S/A/C in the first device receives the feedback result (success) sent by the SHE in the first device.

S609: The KMS-S/A/C in the first device feeds back the execution result (success) of CMD_SET_KEY_SLAVESLOT to the cloud (for example, the KMS-server) by using a message.

Correspondingly, the KMS-server in the second device receives the execution result (success) of CMD_SET_KEY_SLAVESLOT that is sent by the KMS-S/A/C in the first device.

S610: The KMS-server in the second device updates a cloud vehicle database, for example, updates a configuration result of configuration file information that is in a KMS and that corresponds to the first device.

Based on this, the vehicle side and the cloud may extend the hardware security mechanism, so that the hardware security mechanism can support key update. Based on the slave solution, a memory slot may be reserved as the second memory slot by using a hardware mechanism, to reduce memory occupancy of setting the second memory slot, and implement the second memory slot on-demand.

The foregoing has described the process of setting the second memory slot based on the slave solution. Optionally, key update may be implemented based on the slave solution. For example, the following uses the slave solution as an example to describe a process of updating a key.

For example, FIG. 7A to FIG. 7D are another schematic flowchart of updating the key based on the slave solution according to an embodiment of this application. As shown in FIG. 7A to FIG. 7D, the procedure may include a target device (for example, an ECU 1) in a vehicle and a cloud key management center.

Functions of the target device (for example, the ECU 1) in the vehicle and the cloud key management center are similar to the functions of the devices used to update the key in the pairing solution, and details are not described herein again.

As shown in FIG. 7A to FIG. 7D, it is assumed that MASTER_ECU_KEY of a target device (or referred to as the ECU 1) needs to be updated, a currently used key is stored in a memory slot 1, and a second key is stored in a memory slot z when a key is updated next time. In this case, a detailed processing procedure of updating the MASTER_ECU_KEY key may include the following steps.

S701: Start key update.

S702: The KMS-server in the second device instructs to build second encryption information.

In this embodiment of this application, parameters used to build the second encryption information may include: target storage location: 1; location of a protected key: 1; and local storage location of MEK: X. The KMS-server in the second device sends the foregoing data to the HSM/SHE in the second device.

S703: The HSM/SHE in the second device builds the second encryption information.

In this embodiment of this application, a process of building the second encryption information may include: the HSM/SHE in the second device generates the new MEK for the ECU 1, and stores the new MEK into Y; obtains the current MEK of the ECU 1 from X, and derives K1 and K2; and builds input parameters (M1, M2, M3) of CMD_LOAD_KEY.

M1=UID|1|1; M2=ENCCBC, K1, IV=0 (counter|pairing (flags)|"0... 0"₉₅|new MEK); M3=CMAC (K2, M1|M2). The foregoing process of building the second encryption information is similar to the process of building the second encryption information in the pairing solution, and details are not described herein again.

S704: The HSM/SHE in the second device sends the second encryption information to the KMS-server in the second device.

Correspondingly, the KMS-server in the second device receives the second encryption information sent by the HSM/SHE in the second device.

S705: The KMS-server in the second device sends, by using a message, the second message including the second encryption information to each device (for example, a KMS-S/A/C) in the first device.

Correspondingly, the KMS-S/A/C in the first device receives the second encryption information sent by the KMS-server in the second device.

S706: The KMS-S/A/C in the first device sends the second encryption information to the SHE in the first device, and performs key update.

Correspondingly, the SHE in the first device receives the second encryption information sent by the KMS-S/A/C in the first device.

S707: The SHE in the first device verifies the second encryption information, and may build third encryption information after the second encryption information is successfully verified.

In this embodiment of this application, after the second encryption information is successfully verified, the second key may be set to be stored in the memory slot z.

A process in which the SHE/HSM in the first device performs verification based on the input parameters (M1, M2, M3) of the CMD_LOAD_KEY command may include: The SHE in the first device may derive K1 by using the key in the memory slot 1, and decrypt M2 to obtain a new MKE.

The SHE in the first device may determine whether the memory slot 1 has a second memory slot. When the memory slot 1 has the second memory slot, the new MKE is stored in the memory slot z.

The SHE in the first device builds output parameters M4 and M5 of CMD_LOAD_KEY. In M4, the memory slot is 1, and KEY_ID is also 1. Both the cipher key K3 in M4 and the integrity computation key K4 in M5 are derived by using the second key stored in the memory slot 9.

It may be understood that the foregoing verification method is similar to the verification method in the pairing solution, and details are not described herein again.

S708: The SHE in the first device sends the third encryption information to the KMS-S/A/C in the first device.

Correspondingly, the KMS-S/A/C in the first device receives the third encryption information sent by the SHE in the first device.

S709: The KMS-S/A/C in the first device feeds back the third encryption information to the cloud (for example, the KMS-server) by using a message.

Correspondingly, the KMS-server in the second device receives the third encryption information sent by the KMS-S/A/C in the first device.

S710: The KMS-server in the second device sends the third encryption information to the HSM/SHE in the second device.

Correspondingly, the HSM/SHE in the second device receives the third encryption information sent by the KMS-server in the second device.

S711: The HSM/SHE in the second device verifies the third encryption information.

A process in which the HSM/SHE in the second device verifies the third encryption information may include: The HSM/SHE in the second device verifies that the key of the ECU 1 is stored in X, and the HSM/SHE in the second device finds that the key is being updated, derives K3 and K4 by using the key in the second memory slot Y, verifies M5, decrypts M4, and verifies an execution result of CMD_LOAD_KEY. It may be understood that the foregoing verification method is similar to the verification method in the pairing solution, and details are not described herein again.

S712: The HSM/SHE in the second device returns a verification result (success) to the KMS-server in the second device.

Correspondingly, the KMS-server in the second device receives the verification result (success) sent by the HSM/SHE in the second device.

S713: The KMS-server in the second device determines that the second key is successfully stored, and starts deletion of the first key.

S714: The KMS-server in the second device instructs the HSM/SHE in the second device to build fourth encryption information.

The fourth encryption information may be built based on CMD_SWITCH_SLAVE_KEYINFO, and a temporary local storage location of the MEK is X.

S715: The HSM/SHE in the second device builds the fourth encryption information.

A process in which the HSM/SHE in the second device builds the fourth encryption information may include: building input parameters of CMD_SWITCH_SLAVE_KEYINFO: M1=1|1; M2=CMAC (new MEK, M1). The foregoing process of building the fourth encryption information is similar to the process of building the fourth encryption information in the pairing solution, and details are not described herein again.

S716: The HSM/SHE in the second device sends the fourth encryption information to the KMS-server in the second device.

Correspondingly, the KMS-server in the second device receives the fourth encryption information sent by the HSM/SHE in the second device.

S717: The KMS-server in the second device sends the fourth encryption information to each device (for example, a KMS-S/A/C) in the first device by using a message.

Correspondingly, the KMS-S/A/C in the first device receives the fourth encryption information sent by the KMS-server in the second device.

S718: The KMS-S/A/C in the first device sends the fourth encryption information to the SHE in the first device.

Correspondingly, the SHE in the first device receives the fourth encryption information sent by the KMS-S/A/C in the first device.

S719: The SHE in the first device verifies the fourth encrypted message.

In this embodiment of this application, a process in which the SHE in the first device verifies the fourth encrypted message may include: The SHE in the first device performs verification based on the CMD_SWITCH_SLAVE_KEYINFO (M1, M2), and after the verification succeeds, moves the key in the memory slot z to the memory slot 1 and clears content in the memory slot z.

It may be understood that the foregoing verification method is similar to the verification method in the pairing solution, and details are not described herein again.

The CMD_MOVE_KEY_SLOT command may be used to move the key in the memory slot z to the memory slot 1. Function descriptions of CMD_MOVE_KEY_SLOT may be shown in Table 16.

**Table 16 Schematic table of the function descriptions of CMD_MOVE_KEY_SLOT**

| Parameter | Direction | Width (bits) |
|---|---|---|
| M1 | in | 24 |
| M2 | in | 128 |

CMD_MOVE_KEY_SLOT: indicates that the SHE is instructed to move the key in the memory slot 1 to the memory slot 2, clear the key information in the memory slot 1, set the value of buildstatus to "0-Not built", set the value of inuse to 0, and set the value of Key ID to 0.

Input parameters:
M1=KEY_ID|memory slot 1|memory slot 2; M2=CMAC (key, M1).

"memory slot 1" indicates an original memory slot of the key to be moved, which can be a source memory slot of the key.

"memory slot 2" indicates the target memory slot of the key to be moved, which can be a target memory slot of the key.

"KEY_ID" indicates a key (key) to be used as a key used for computing M2, for example, the KEY_ID may be MASTER_ECU_KEY of the target device.

"key" indicates a key corresponding to KEY_ID.

If the value of "memory slot 1" or "memory slot 2" is 0, this command can be ignored.

S720: The SHE in the first device sends an execution result (success) of deleting the first key to the KMS-S/A/C in the first device.

Correspondingly, the KMS-S/A/C in the first device receives the execution result (success) of deleting the first key sent by the SHE in the first device.

S721: The KMS-S/A/C in the first device feeds back the execution result (success) of deleting the first key to the cloud (for example, the KMS-server) by using a message.

Correspondingly, the KMS-server in the second device receives the execution result (success) of deleting the first key sent by the KMS-S/A/C in the first device.

S722: The KMS-server in the second device instructs the HSM/SHE in the second device to delete the first key of the ECU 1, move the second key to the location X, and clear the location Y for next update of a next ECU.

Optionally, in a key update process, key information in a memory slot may be queried by using CMD_GET_KEY_INFO. For example, function descriptions of CMD_GET_KEY_INFO may be shown in Table 17.

**Table 17 Schematic table of the function descriptions of CMD_GET_KEY_INFO**

| Parameter | Direction | Width (bits) |
|---|---|---|
| M1 | in | 16 |
| M2 | in | 128 |
| M3 | out | (13, or 24)*8 |
| M4 | out | 128 |

CMD_GET_KEY_INFO: Returns information about keys based on the memory slot 1 that is input. For example, the key flag or pairslot information of memory slot 1 can be returned. If there is a pair key or a slave key, information about the pair key or the slave key can also be returned. However, the key content cannot be queried.

Input parameters:
M1=KEY_ID|memory slot 1; M2=CMAC (key, M1).

Output parameters:
M3=KEY_ID|memory slot 1|key1 Info|flag [|memory slot 2|key2 Info];
M4=CMAC (key, M3).

"KEY_ID" indicates the key used for computing M2.

If KEY_ID is 0, it indicates that the command does not include verification information. In this case, M2 and M4 can be ignored. KEY_ID can be used by the CKMS to check whether the key build status is "completed" during device startup. For example, if the build status of each key is "not completed", an alarm may be reported, and a vehicle is prohibited from traveling.

"key" indicates a key corresponding to KEY_ID.

"memory slot 1" indicates a location of the key to be queried this time.

"key1 Info" indicates information about a key in the memory slot 1. Refer to the definition of "key Info" below.

"flag" indicates whether the memory slot corresponding to key1 is used for pairing or has a slave memory slot, that is, may indicate whether a memory slot 2 and key2 Info are included. If the value of "flag" is 0, neither the memory slot 2 nor the key2 Info is included. If the value of "flag" is 1, the memory slot 2 and the key2 Info are included, and it indicates that the memory slot corresponding to key1 and the memory slot 2 are paired. If the value of flag is 2, the memory slot 2 and key2 Info are included, and it indicates that the memory slot 2 is set as a slave memory slot for the memory slot corresponding to key1.

"memory slot 2" indicates a value of the pairslot field of key1, that is, a memory slot corresponding to key2. If the memory slot 2 is a slave memory slot and cannot be accessed from the outside, the value of "memory slot 2" can be 0.

"key2 Info" indicates information about a key in the memory slot 2.

The structure of key1 Info is the same as that of key2 Info. The included fields (10 bytes in total) are as follows:
key Info=keyflags|00|counter (28 bits)|pairslot|Key ID,
keyflags=write-protection (1 bit)|secure boot failure (1 bit)ldebugger activation (1 bit)|wildcard UID (1 bit)|key usage (1 bit)|plain key (1 bit)|buildstatus (1 bit)|supportupdate (1 bit)|inuse (1 bit)|isslave (1 bit) (10 bits in total);
00: two 1 bit 0s (2 bits); counter: 28 bits; pairslot: 8 bits; key ID: 32 bits (10 bytes in total).

Based on this, the first device and the second device may extend the hardware security mechanism, so that the hardware security mechanism can support key update, thereby simplifying key update operations and improving efficiency of key update. In addition, when a key is updated based on a slave solution, a memory slot may be reserved as a second memory slot by using a hardware mechanism, thereby reducing memory occupancy for setting the second memory slot, and implementing use of the second memory slot as needed.

The foregoing has described the methods according to the embodiments of this application with reference to FIG. 2 to FIG. 7A to FIG. 7D. The following describes an apparatus according to an embodiment of this application and that is used to perform the foregoing methods.

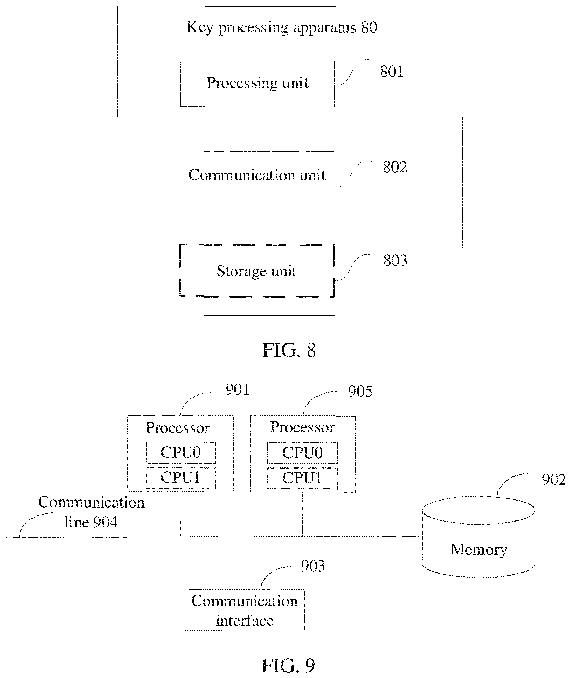

For example, FIG. 8 is a schematic diagram of a structure of a key processing apparatus according to an embodiment of this application. As shown in FIG. 8, the key processing apparatus 80 may be used in a communication device, a circuit, a hardware component, or a chip. The key processing apparatus includes a processing unit 801 and a communication unit 802. The processing unit 801 is configured to support the key processing apparatus in performing an information processing step. The communication unit 802 is configured to support the key processing apparatus in performing a data sending or receiving step.

Specifically, an embodiment of this application provides a key processing apparatus, including: a processing unit 801, configured to determine a first memory slot, where the first memory slot is used to store a first key; and the processing unit 801 is further configured to determine a second memory slot associated with the first memory slot, where the second memory slot is used to store a second key, and the second key is an update key of the first key.

In a possible implementation, the processing unit 801 is further configured to determine, based on a hardware security mechanism, the second memory slot associated with the first memory slot, where the hardware security mechanism is used to update the first key.

In a possible implementation, the second memory slot is predefined by the hardware security mechanism, or the second memory slot is determined according to a first command received by an interface in the hardware security mechanism.

In a possible implementation, when the first key is updated: the first memory slot and the second memory slot are alternately used; or the first memory slot is always used to store an updated key.

In a possible implementation, storage information of the key includes at least one of the following: information used to indicate a key build status, information used to indicate whether a key is being used, or information used to indicate whether a key is an un-updated key or an updated key.

In a possible implementation, the storage information of the first key further includes: information used to indicate that a memory slot of the first key is the first memory slot or the second memory slot, or information used to indicate a memory slot paired with the memory slot of the first key.

In a possible implementation, the first command includes at least one of the following: a command used to instruct to pair the first memory slot and the second memory slot, a command used to instruct to unpair the first memory slot and the second memory slot, a command used to instruct to update a key, a command used to instruct to clear an un-updated key, a command used to instruct to query key information in the first memory slot and/or the second memory slot, or a command used to instruct to transfer a key from one memory slot to another memory slot.

In a possible implementation, the communication unit 802 configured to receive a first message from a second device, where the first message includes first encryption information used to indicate the first memory slot and the second memory slot; the processing unit 801 is specifically configured to verify the first encryption information; and when the first encryption information is successfully verified, the processing unit 801 is further specifically configured to determine the second memory slot associated with the first memory slot.

In a possible implementation, when the first encryption information is successfully verified, the processing unit 801 is specifically configured to verify whether the second memory slot is occupied; and when the second memory slot is not occupied, the processing unit 801 is further specifically configured to determine the second memory slot associated with the first memory slot.

In a possible implementation, the first encryption information includes a first parameter M1 and a second parameter M2, where M1 is related to information in the first memory slot and information in the second memory slot, and M2 is related to M1 and the first key.

In a possible implementation, the processing unit 801 is further configured to unbind the second memory slot based on a hardware security mechanism.

In a possible implementation, the processing unit 801 is further configured to update the first key based on the hardware security mechanism.

In a possible implementation, the communication unit 802 is specifically configured to receive a second message from the second device, where the second message includes second encryption information used to indicate a first memory slot, a second memory slot, and a second key; the processing unit 801 is specifically configured to obtain the second key according to the second encryption information; the processing unit 801 is further specifically configured to store the second key in the second memory slot; the processing unit 801 is further specifically configured to build third encryption information according to the second key and the second memory slot, where the third encryption information indicates the first device to complete storage of the second key; and the communication unit 802 is further specifically configured to send the third encryption information to the second device.

In a possible implementation, the second encryption information includes a third parameter M3, a fourth parameter M4, and a fifth parameter M5, where M3 is related to information in the first memory slot and information in the second memory slot, M4 is related to the second key, and M5 is related to M3, M4, and the first key.

In a possible implementation, the third encryption information includes a sixth parameter M6 and a seventh parameter M7, where M6 is related to information in the second memory slot, and M7 is related to the second key.

In a possible implementation, the communication unit 802 is further configured to receive fourth encryption information from the second device, where the fourth encryption information indicates the first device to delete the first key; the processing unit 801 is further configured to verify the fourth encryption information; and when the fourth encryption information is successfully verified, the processing unit 801 is further configured to delete the first key; or if the verification of the fourth encryption information succeeds, the processing unit 801 is further configured to: delete the first key, transfer the second key from the second memory slot to the first memory slot, and cancel the association relationship between the second memory slot and the first memory slot.

In a possible implementation, the fourth encryption information includes an eighth parameter M8 and a ninth parameter M9, where M8 is related to information in the second memory slot, and M9 is related to M8 and the second key.

In a possible implementation, the communication unit 802 is further configured to receive a command used to instruct to pair the first memory slot and the second memory slot; the processing unit 801 is further configured to generate, by the first device, first encryption information based on a hardware security mechanism according to the command used to instruct to pair the first memory slot and the second memory slot, where the first encryption information indicates the first memory slot and the second memory slot; and the communication unit 802 is further configured to send a first message to the second device, where the first message includes the first encryption information.

In a possible implementation, the communication unit 802 is further configured to receive a command used to instruct to update a key; the processing unit 801 is further configured to generate second encryption information based on the hardware security mechanism according to the command used to instruct to update a key, where the second encryption information indicates the first memory slot, the second memory slot, and the second key; the communication unit 802 is further configured to send a second message to the second device, where the second message includes the second encryption information; the communication unit 802 is further configured to receive third encryption information from the second device, where the third encryption information indicates the second device to complete storage of the second key; the processing unit 801 is further configured to verify the third encryption information; and when the verification of the third encryption information succeeds, the processing unit 801 is further configured to determine that the second key is successfully updated.

In a possible implementation, the communication unit 802 is further configured to send fourth encryption information to the second device, where the fourth encryption information indicates the first device to delete the first key.

In a possible embodiment, the key processing apparatus may further include a storage unit 803. The processing unit 801 and the storage unit 803 are connected by using a line.

The storage unit 803 may include one or more memories. The memory may be a component configured to store a program or data in one or more devices or circuits.

The storage unit 803 may exist independently, and is connected to the processing unit 801 of the key processing apparatus by using a communication line. The storage unit 803 may alternatively be integrated with the processing unit 801.

The communication unit 802 may be an input/output interface, a pin, a circuit, or the like. For example, the storage unit 803 may store computer executable instructions of the method of the radar or the target device, so that the processing unit 801 performs the method of the radar or the target device in the foregoing embodiments. The storage unit 803 may be a register, a cache, a RAM, or the like. The storage unit 803 may be integrated into the processing unit 801. The storage unit 803 may be a ROM or another type of static storage device that can store static information and instructions, and the storage unit 803 may be independent of the processing unit 801.

For example, FIG. 9 is a schematic diagram of a hardware structure of a control device according to an embodiment of this application. As shown in FIG. 9, the control device includes a processor 901, a communication line 904, and at least one communication interface (for example, in FIG. 9, a communication interface 903 is used as an example for description).

The processor 901 may be a general-purpose central processing unit (central processing unit, CPU), a microprocessor, an application-specific integrated circuit (application-specific integrated circuit, ASIC), or one or more integrated circuits configured to control program execution in the solutions of this application.

The communication line 904 may include a circuit for transmitting information between the foregoing components.

The communication interface 903 uses any apparatus such as a transceiver, and is configured to communicate with another device or communication network, for example, the Ethernet or a wireless local area network (wireless local area network, WLAN).

Possibly, the control device may further include a memory 902.

The memory 902 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can be used to carry or store expected program code in a form of an instruction or a data structure and that can be accessed by a computer. However, this is not limited thereto. The memory may exist independently, and is connected to the processor by using the communication line 904. The memory may alternatively be integrated with the processor.

The memory 902 is configured to store computer executable instructions for executing the solutions of this application, and the processor 901 controls the execution. The processor 901 is configured to execute the computer executable instructions stored in the memory 902, to implement the key processing methods according to the embodiments of this application.

Possibly, the computer executable instructions in this embodiment of this application may also be referred to as application program code. This is not specifically limited in this embodiment of this application.

In specific implementation, in an embodiment, the processor 901 may include one or more CPUs, for example, a CPU 0 and a CPU 1 in FIG. 9.

During specific implementation, in an embodiment, the control device may include a plurality of processors, such as a processor 901 and a processor 905 in FIG. 9. Each of the processors may be a single-core (single-CPU) processor, or may be a multi-core (multi-CPU) processor. The processor herein may be one or more devices, circuits, and/or processing cores configured to process data (for example, computer program instructions).

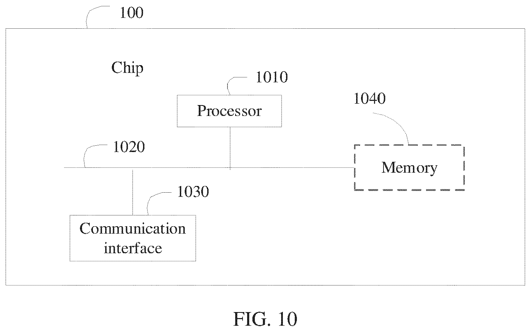

For example, FIG. 10 is a schematic diagram of a structure of a chip according to an embodiment of this application. The chip 100 includes one or more (including two) processors 1020 and a communication interface 1030.

In some implementations, a memory 1040 stores the following elements: an executable module or a data structure, or a subset thereof, or an extended set thereof.

In this embodiment of this application, the memory 1040 may include a read-only memory and a random access memory, and provide instructions and data to the processor 1020. A part of the memory 1040 may further include a non-volatile random access memory (non-volatile random access memory, NVRAM).

In this embodiment of this application, the memory 1040, the communication interface 1030, and the memory 1040 are coupled together by using a bus system 2020. The bus system 2020 may further include a power bus, a control bus, and a status signal bus in addition to a data bus. For ease of description, various buses are marked as the bus system 2020 in FIG. 10.

The method described in the embodiments of this application may be applied to the processor 1020 or implemented by the processor 1020. The processor 1020 may be an integrated circuit chip and has a signal processing capability. In an implementation process, steps in the methods may be implemented by using a hardware integrated logic circuit in the processor 1020, or by using instructions in a form of software. The processor 1020 may be a general-purpose processor (for example, a microprocessor or a conventional processor), a digital signal processor (digital signal processing, DSP), an application-specific integrated circuit (application-specific integrated circuit, ASIC), a programmable gate array (field-programmable gate array, FPGA) or another programmable logic device, a discrete gate, a transistor logic device, or a discrete hardware component. The processor 1020 may implement or execute the methods, the steps, and the logical block diagrams disclosed in the embodiments of the present invention.

Steps of the methods disclosed with reference to embodiments of this application may be directly executed and accomplished by using a hardware decoding processor, or may be executed and accomplished by using a combination of hardware and software modules in the decoding processor. The software module may be located in a mature storage medium in the art, such as a random access memory, a read only memory, a programmable read only memory, or an electrically erasable programmable read only memory (electrically erasable programmable read only memory, EEPROM). The storage medium is located in the memory 1040, and the processor 1020 reads information in the memory 1040 and completes the steps in the foregoing methods in combination with hardware of the processor 1020.

In the foregoing embodiments, the instructions that are stored in the memory and that are to be executed by the processor may be implemented in a form of a computer program product. The computer program product may be written in the memory in advance, or may be downloaded and installed in the memory in the form of software.

The computer program product includes one or more computer instructions. When the computer program instructions are loaded and executed on a computer, all or some of the procedures or functions according to embodiments of this application are generated. The computer may be a general-purpose computer, a special-purpose computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to a computer, or a data storage device, for example, a server or a data center, integrating one or more usable media. For example, the usable medium may include a magnetic medium (for example, a floppy disk, a hard disk, or a magnetic tape), an optical medium (for example, a digital versatile disc (digital versatile disc, DVD)), a semiconductor medium (for example, a solid state disk (solid state disk, SSD)), or the like.

An embodiment of this application further provides a computer-readable storage medium. The methods described in the foregoing embodiments may be all or partially implemented by software, hardware, firmware, or any combination thereof. The computer-readable medium may include a computer storage medium and a communication medium, and may alternatively include any medium that may transmit a computer program from one place to another. The storage medium may be any target medium that can be accessed by a computer.

In a possible design, the computer-readable medium may include a compact optical disc read-only memory (compact disc read-only memory, CD-ROM), a RAM, a ROM, an EEPROM, or another optical disc memory. The computer-readable medium may include a magnetic disk memory or another magnetic disk storage device. In addition, any connecting line may be appropriately referred to as a computer-readable medium. For example, if software is transmitted from a website, a server or another remote source by using a coaxial cable, an optical fiber cable, a twisted pair, a DSL or wireless technologies (for example, infrared, radio, and microwave), the coaxial cable, the optical fiber cable, the twisted pair, the DSL or wireless technologies such as infrared, radio and microwave are included in the definition of medium. As used herein, magnetic and optical discs include a compact disc (CD), a laser disc, an optical disc, a digital versatile disc (digital versatile disc, DVD), a floppy disc, and a Blu-ray disc, and the magnetic disc usually reproduces data magnetically, while the optical disc reproduces data optically using lasers.

The foregoing combinations also need to be included within the scope of the computer-readable medium. The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A key processing method, wherein the method comprises:
determining, by a first device, a first memory slot, wherein the first memory slot is used to store a first key; and
determining, by the first device, a second memory slot associated with the first memory slot, wherein the second memory slot is used to store a second key, and the second key is an update key of the first key.

2. The method according to claim 1, wherein the determining, by the first device, a second memory slot associated with the first memory slot comprises:
determining, by the first device based on a hardware security mechanism, the second memory slot associated with the first memory slot, wherein the hardware security mechanism is used to update the first key.

3. The method according to claim 1 or 2, wherein the second memory slot is predefined by the hardware security mechanism, or the second memory slot is determined according to a first command received by an interface in the hardware security mechanism.

4. The method according to any one of claims 1 to 3, wherein when the first key is updated:
the first memory slot and the second memory slot are alternately used; or
the first memory slot is always used to store an updated key.

5. The method according to any one of claims 1 to 4, wherein storage information of the key comprises at least one of the following: information used to indicate a key build status, information used to indicate whether a key is being used, or information used to indicate whether a key is an un-updated key or an updated key.

6. The method according to claim 5, wherein the storage information of the first key further comprises: information used to indicate that a memory slot of the first key is the first memory slot or the second memory slot, or information used to indicate a memory slot paired with a memory slot of the first key.

7. The method according to any one of claims 3 to 6, wherein the first command comprises at least one of the following: a command used to instruct to pair the first memory slot and the second memory slot, a command used to instruct to unpair the first memory slot and the second memory slot, a command used to instruct to update a key, a command used to instruct to clear an un-updated key, a command used to instruct to query key information in the first memory slot and/or the second memory slot, or a command used to instruct to transfer a key from one memory slot to another memory slot.

8. The method according to any one of claims 1 to 7, wherein the determining, by the first device based on a hardware security mechanism, the second memory slot associated with the first memory slot comprises:
receiving, by the first device, a first message from a second device, wherein the first message comprises first encryption information used to indicate the first memory slot and the second memory slot;
verifying, by the first device, the first encryption information; and
determining, by the first device, the second memory slot associated with the first memory slot when the first encryption information is successfully verified.

9. The method according to claim 8, wherein the determining, by the first device, the second memory slot associated with the first memory slot when the first encryption information is successfully verified comprises:
when the first encryption information is successfully verified, verifying, by the first device, whether the second memory slot is occupied; and
when the second memory slot is not occupied, determining, by the first device, the second memory slot associated with the first memory slot.

10. The method according to claim 8 or 9, wherein the first encryption information comprises a first parameter M1 and a second parameter M2, wherein
M1 is related to information in the first memory slot and information in the second memory slot, and M2 is related to M1 and the first key.

11. The method according to any one of claims 8 to 10, wherein the method further comprises:
unbinding, by the first device, the second memory slot based on the hardware security mechanism.

12. The method according to any one of claims 8 to 10, wherein the method further comprises:
updating, by the first device, the first key based on the hardware security mechanism.

13. The method according to claim 12, wherein the updating, by the first device, the first key based on the hardware security mechanism comprises:
receiving, by the first device, a second message from the second device, wherein the second message comprises second encryption information used to indicate the first memory slot, the second memory slot, and a second key;
obtaining, by the first device, the second key according to the second encryption information;
storing, by the first device, the second key in the second memory slot;
generating, by the first device, third encryption information according to the second key and the second memory slot, wherein the third encryption information indicates the first device to complete storage of the second key; and
sending, by the first device, the third encryption information to the second device.

14. The method according to claim 13, wherein the second encryption information comprises:
a third parameter M3, a fourth parameter M4, and a fifth parameter M5, wherein
M3 is related to the information in the first memory slot and the information in the second memory slot, M4 is related to the second key, and M5 is related to M3, M4, and the first key.

15. The method according to claim 13, wherein the third encryption information comprises a sixth parameter M6 and a seventh parameter M7, wherein
M6 is related to the information in the second memory slot, and M7 is related to the second key.

16. The method according to any one of claims 13 to 15, wherein after the sending, by the first device, the third encryption information to the second device, the method further comprises:
receiving, by the first device, fourth encryption information from the second device, wherein the fourth encryption information indicates the first device to delete the first key;
verifying, by the first device, the fourth encryption information; and
when the fourth encryption information is successfully verified, deleting, by the first device, the first key; or
when the fourth encryption information is successfully verified, deleting, by the first device, the first key, transferring the second key from the second memory slot to the first memory slot, and canceling the association relationship between the second memory slot and the first memory slot.

17. The method according to claim 16, wherein the fourth encryption information comprises an eighth parameter M8 and a ninth parameter M9, wherein
M8 is related to the information in the second memory slot, and M9 is related to M8 and the second key.

18. The method according to any one of claims 1 to 7, wherein the method further comprises:
receiving, by the first device, the command used to instruct to pair the first memory slot and the second memory slot;
generating, by the first device, first encryption information based on the hardware security mechanism according to the command used to instruct to pair the first memory slot and the second memory slot, wherein the first encryption information indicates the first memory slot and the second memory slot; and
sending, by the first device, a first message to the second device, wherein the first message comprises the first encryption information.

19. The method according to claim 18, wherein the method further comprises:
receiving, by the first device, the command used to instruct to update a key;
generating, by the first device, second encryption information based on the hardware security mechanism according to the command used to instruct to update a key, wherein the second encryption information indicates the first memory slot, the second memory slot, and the second key;
sending, by the first device, a second message to the second device, wherein the second message comprises the second encryption information;
receiving, by the first device, third encryption information from the second device, wherein the third encryption information indicates the second device to complete storage of the second key;
verifying, by the first device, the third encryption information; and
when the third encryption information is successfully verified, determining, by the first device, that the second key is successfully updated.

20. The method according to claim 19, wherein the method further comprises:
sending, by the first device, fourth encryption information to the second device, wherein the fourth encryption information indicates the first device to delete the first key.

21. A key processing apparatus, wherein the apparatus comprises:
a processing unit, configured to determine a first memory slot, wherein the first memory slot is used to store a first key; and
the processing unit is further configured to determine a second memory slot associated with the first memory slot, wherein the second memory slot is used to store a second key, and the second key is an update key of the first key.

22. The apparatus according to claim 21, wherein the processing unit is further configured to determine, based on a hardware security mechanism, the second memory slot associated with the first memory slot, wherein the hardware security mechanism is used to update the first key.

23. The apparatus according to claim 21 or 22, wherein the second memory slot is predefined by the hardware security mechanism, or the second memory slot is determined according to a first command received by an interface in the hardware security mechanism.

24. The apparatus according to any one of claims 21 to 23, wherein when the first key is updated:
the first memory slot and the second memory slot are alternately used; or
the first memory slot is always used to store an updated key.

25. The apparatus according to any one of claims 21 to 24, wherein storage information of the key comprises at least one of the following: information used to indicate a key build status, information used to indicate whether a key is being used, or information used to indicate whether a key is an un-updated key or an updated key.

26. The apparatus according to claim 25, wherein the storage information of the first key further comprises: information used to indicate that a memory slot of the first key is the first memory slot or the second memory slot, or information used to indicate a memory slot paired with a memory slot of the first key.

27. The apparatus according to any one of claims 23 to 26, wherein the first command comprises at least one of:
a command used to instruct to pair the first memory slot and the second memory slot, a command used to instruct to unpair the first memory slot and the second memory slot, a command used to instruct to update a key, a command used to instruct to clear an un-updated key, a command used to instruct to query key information in the first memory slot and/or the second memory slot, or a command used to instruct to transfer a key from one memory slot to another memory slot.

28. The apparatus according to any one of claims 21 to 27, further comprising: a communication unit, wherein the communication unit is configured to receive a first message from a second device, and the first message comprises first encryption information used to indicate the first memory slot and the second memory slot;
the processing unit is specifically configured to verify the first encryption information; and
when the first encryption information is successfully verified, the processing unit is further specifically configured to determine the second memory slot associated with the first memory slot.

29. The apparatus according to claim 28, wherein when the first encryption information is successfully verified, the processing unit is specifically configured to verify whether the second memory slot is occupied; and
when the second memory slot is not occupied, the processing unit is further specifically configured to determine the second memory slot associated with the first memory slot.

30. The apparatus according to claim 28 or 29, wherein the first encryption information comprises a first parameter M1 and a second parameter M2, wherein
M1 is related to information in the first memory slot and information in the second memory slot, and M2 is related to M1 and the first key.

31. The apparatus according to any one of claims 28 to 30, wherein the processing unit is further configured to unbind the second memory slot based on the hardware security mechanism.

32. The apparatus according to any one of claims 28 to 30, wherein the processing unit is further configured to update the first key based on the hardware security mechanism.

33. The apparatus according to claim 32, wherein the communication unit is configured to receive a second message from the second device, and the second message comprises second encryption information used to indicate the first memory slot, the second memory slot, and the second key;
the processing unit is specifically configured to obtain the second key according to the second encryption information;
the processing unit is further specifically configured to store the second key in the second memory slot;
the processing unit is further specifically configured to build third encryption information according to the second key and the second memory slot, wherein the third encryption information indicates the first device to complete storage of the second key; and
the communication unit is further specifically configured to send the third encryption information to the second device.

34. The apparatus according to claim 33, wherein the second encryption information comprises a third parameter M3, a fourth parameter M4, and a fifth parameter M5, wherein
M3 is related to the information in the first memory slot and the information in the second memory slot, M4 is related to the second key, and M5 is related to M3, M4, and the first key.

35. The apparatus according to claim 33, wherein the third encryption information comprises a sixth parameter M6 and a seventh parameter M7, wherein
M6 is related to the information in the second memory slot, and M7 is related to the second key.

36. The apparatus according to any one of claims 33 to 35, wherein the communication unit is further configured to receive fourth encryption information from the second device, and the fourth encryption information indicates the first device to delete the first key;
the processing unit is further configured to verify the fourth encryption information; and
when the fourth encryption information is successfully verified, the processing unit is further configured to delete the first key; or
when the fourth encryption information is successfully verified, the processing unit is further configured to: delete the first key, transfer the second key from the second memory slot to the first memory slot, and cancel the association relationship between the second memory slot and the first memory slot.

37. The apparatus according to claim 36, wherein the fourth encryption information comprises an eighth parameter M8 and a ninth parameter M9, wherein
M8 is related to the information in the second memory slot, and M9 is related to M8 and the second key.

38. The apparatus according to any one of claims 21 to 27, wherein the communication unit is further configured to receive a command used to instruct to pair the first memory slot and the second memory slot;
the processing unit is further configured to generate, by the first device, first encryption information based on the hardware security mechanism according to the command used to instruct to pair the first memory slot and the second memory slot, wherein the first encryption information indicates the first memory slot and the second memory slot; and
the communication unit is further configured to send a first message to the second device, wherein the first message comprises the first encryption information.

39. The apparatus according to claim 38, wherein the communication unit is further configured to receive the command used to instruct to update the key;
the processing unit is further configured to generate second encryption information based on the hardware security mechanism according to the command used to instruct to update a key, wherein the second encryption information indicates the first memory slot, the second memory slot, and the second key;
the communication unit is further configured to send a second message to the second device, wherein the second message comprises the second encryption information;
the communication unit is further configured to receive third encryption information from the second device, wherein the third encryption information indicates the second device to complete storage of the second key;
the processing unit is further configured to verify the third encryption information; and
when the third encryption information is successfully verified, the processing unit is further configured to determine that the second key is successfully updated.

40. The apparatus according to claim 39, wherein the communication unit is further configured to send fourth encryption information to the second device, wherein the fourth encryption information indicates the first device to delete the first key.

41. An electronic device, comprising at least one processor, wherein the processor is configured to invoke a program in a memory, to perform processing steps in the method according to any one of claims 1 to 20.

42. An electronic device, comprising at least one processor and an interface circuit, wherein the interface circuit is configured to provide an information input and/or an information output for the at least one processor, and the at least one processor is configured to perform the method according to any one of claims 1 to 20.

43. A chip, comprising at least one processor and an interface, wherein
the interface is configured to provide program instructions or data for the at least one processor; and
the at least one processor is configured to execute the program instructions, to implement the method according to any one of claims 1 to 20.

44. A computer-readable storage medium, wherein the computer-readable storage medium stores instructions, and when the instructions are executed, a computer is enabled to perform the method according to any one of claims 1 to 20.

45. A computer program product, comprising a computer program, wherein when the computer program is run, the computer is enabled to perform the method according to any one of claims 1 to 20.
